# EUROPEAN PATENT APPLICATION

(11) **EP 4 210 395 A1**
(43) Date of publication of application: **12.07.2023**
(21) Application number: 21864102.5
(22) Date of filing: 18.08.2021
(51) Int. Cl.: H04W 36/38, H04W 72/04, H04W 4/021, H04W 48/14, H04W 48/16

(54) **MANAGEMENT DEVICE, MANAGEMENT METHOD, WIRELESS COMMUNICATION DEVICE, AND WIRELESS COMMUNICATION METHOD**

(30) Priority: 02.09.2020 JP 2020147911
(71) Applicant: Sony Group Corporation, Minato-Ku, Tokyo, 108-0075 (JP)
(72) Inventor: TSUDA, Shinichiro, Tokyo 108-0075 (JP)
(74) Representative: Witte, Weller & Partner Patentanwälte mbB
(86) International application number: PCT/JP2021/030114
(87) International publication number: WO 2022/050044

(57) **Abstract**

A management device includes: a reception unit that receives, from a wireless communication device, a request for updating first information for selecting a service provided by a public wireless communication service; and a transmission unit that transmits, to the wireless communication device, third information obtained by adding second information for selecting a service provided by a local wireless communication service to the first information, in response to the request from the wireless communication device.

## Description

### Field

The present disclosure relates to a management device, a management method, a wireless communication device, and a wireless communication method.

### Background

A private network or a local communication service with a limited service area called local 5G is scheduled to be introduced in a commercial facility, a stadium, a live venue, or the like in the future.

For example, it is desirable to introduce a mechanism for temporarily making a specific service or application among radio access services by many non-public network (NPN) operators available in a certain area or making a specific service or application available to a user based on a request from the user in addition to a public wireless service by a public land mobile network (PLMN). In view of this, a technology for updating network slice selection assistance information (NSSAI) managed for selecting a network slice in accordance with a change in location of a wireless communication device has been proposed (see, for example, Patent Literature 1).

### Citation List

### Patent Literature

Patent Literature 1: WO 2018/139572 A

### Summary

### Technical Problem

However, in the above-described conventional technology, a wireless communication device receives a parameter (information) related to NSSAI or the like from a core network and updates the parameter in accordance with a change in location of the wireless communication device. Therefore, when NSSAI related to a local and high-density service such as local 5G is handled, information communication between the core network and the wireless communication device is frequently performed in accordance with a change in location of the wireless communication device, and a communication load increases. Therefore, it cannot be said that an increase in communication load can be suppressed in the conventional technology.

Therefore, the present disclosure proposes a management device, a management method, a wireless communication device, and a wireless communication method that suppress an increase in communication load.

### Solution to Problem

According to the present disclosure, a management device includes a defect candidate pixel detecting unit that detects a defect candidate pixel for each of captured images captured in a state where positional relationships between an imaging range and an image sensor comprising a plurality of pixels are caused to be different from each other by performing defect candidate pixel detecting processing on each of the plurality of captured images; and an interpolation target defective pixel determining unit that determines, as an interpolation target defective pixel, a pixel detected as the defect candidate pixel a number of times greater than or equal to a threshold value by the defect candidate pixel detecting unit.

### Brief Description of Drawings

FIG. 1 is a diagram illustrating an example of a relationship between a public land mobile network (PLMN) service and a non-public network (NPN) service.
FIG. 2 is a diagram illustrating an example of a functional model of a user equipment (UE) serving as a wireless communication device.
FIG. 3 is a diagram illustrating an example of a configuration of a communication system according to an embodiment of the present disclosure.
FIG. 4 is a diagram illustrating an example of a configuration of a network architecture.
FIG. 5 is a diagram illustrating an example of a configuration of a management device according to an embodiment of the present disclosure.
FIG. 6 is a diagram illustrating an example of a configuration of a base station device according to an embodiment of the present disclosure.
FIG. 7 is a diagram illustrating an example of a configuration of the wireless communication device according to an embodiment of the present disclosure.
FIG. 8 is a sequence diagram for describing an example of a registration procedure.
FIG. 9 is a diagram illustrating an example of use of the NPN service via the PLMN service.
FIG. 10 is a diagram illustrating another example of the configuration of the network architecture.
FIG. 11 is a sequence diagram for describing an example of update processing.
FIG. 12 is a flowchart for describing an example of processing until a service provided by a local wireless communication service is started.
FIG. 13 is a diagram illustrating an example of protocol data unit (PDU) session establishment processing.
FIG. 14 is a diagram illustrating an example of the PDU session establishment processing.
FIG. 15 is a diagram illustrating an example of access network (AN) establishment processing.
FIG. 16 is a flowchart for describing an example of processing until a service provided by the local wireless communication service is terminated.
FIG. 17 is a flowchart for describing another example of processing until a service provided by the local wireless communication service is started.
FIG. 18 is a diagram illustrating another example of the PDU session establishment processing.
FIG. 19 is a diagram illustrating another example of the PDU session establishment processing.
FIG. 20 is a flowchart for describing another example of processing until a service provided by the local wireless communication service is terminated.

### Description of Embodiments

Hereinafter, embodiments of the present disclosure will be described in detail with reference to the drawings. Note that, in each of the following embodiments, the same reference signs denote the same portions, and an overlapping description will be omitted.

Further, in the present specification and the drawings, a plurality of components having substantially the same functional configuration may be distinguished by adding different subscript numbers after the same reference signs. For example, a plurality of components having substantially the same functional configuration are distinguished as a management device 100₁₁, a management device 100₂₁, a management device 100₂₂, and the like as necessary. However, in a case where it is not particularly necessary to distinguish each of the plurality of components having substantially the same functional configuration, only the same reference sign is given. For example, in a case where it is not necessary to particularly distinguish the management device 100₁₁, the management device 100₂₁, the management device 100₂₂, and the like, they are simply referred to as the management device 100.

Further, the present disclosure will be described in the following order.
1. Introduction
   1-1. Definitions and the like
   1-2. Premise of Present Embodiment
2. Configuration of Communication System
   2-1. Overall Configuration of Communication System
   2-2. Configuration Example 1 of Network Architecture
   2-3. Configuration of Management Device
   2-4. Configuration of Base Station Device
   2-5. Configuration of Wireless Communication Device
3. Operation Example of Communication System and the like
   3-1. Example of Registration Procedure
   3-2. Example of Use of Non-Public Network (NPN) Service
   3-3. Configuration Example 2 of Network Architecture
   3-4. Example of Update Processing
   3-5. Example 1 of Start of Service
   3-6. Example 1 of Session Establishment
   3-7. Example of Access Network Establishment
   3-8. Example 1 of Termination of Service
4. Another Operation Example
   4-1. Example 2 of Start of Service
   4-2. Example 2 of Session Establishment
   4-3. Example 2 of Termination of Service
5. Conclusion

### <<1. Introduction>>

### <1-1. Definitions and the like>

Radio access technologies such as Long Term Evolution (LTE) and New Radio (NR) have been studied in the 3rd Generation Partnership Project (3GPP). Each of the LTE and the NR is a type of cellular communication technology, and enables mobile wireless communication of a wireless communication device (user equipment (UE)) by arranging a plurality of areas covered by base stations in a cell shape. In the following description, the "LTE" includes LTE-Advanced (LTE-A), LTE-Advanced Pro (LTE-A Pro), and evolved universal terrestrial radio access (EUTRA). In addition, the NR includes new radio access technology (NRAT) and Further EUTRA (FEUTRA).

The NR is the next generation (5th generation (5G)) radio access technology (RAT) following the LTE. The NR is a radio access technology that can support various use cases including enhanced mobile broadband (eMBB), massive machine type communications (mMTC), and ultra-reliable and low latency communications (URLLC). The NR has been studied for a technical framework that addresses usage scenarios, requirements, arrangement scenarios, and the like in those use cases.

Furthermore, in the NR, studies on a non-terrestrial network (NTN) have started due to an increase in demand for wide area coverage, connection stability, and the like. With the non-terrestrial network, it is possible to provide a wireless communication service conforming to the NR to the wireless communication device via a base station other than a ground station such as a satellite station or an aircraft station. The base station other than the ground station is referred to as a non-ground station or a non-ground base station. A wireless network provided by a ground station is referred to as a terrestrial network (TN). By using the same radio access scheme for the terrestrial network and the non-terrestrial network, integrated operation of the terrestrial network and the non-terrestrial network becomes possible. Here, the base station other than the ground station such as a satellite station or an aircraft station also includes a relay station mounted on a satellite, an aerial vehicle, or an object moving in the air.

In the embodiment of the present disclosure, the ground station (also referred to as the ground base station) refers to a base station (including a relay station) installed on the ground. The term "ground" refers to a ground in a broad sense including not only the top of ground (land) but also the inside of ground, the top of water, and the inside of water, and may be a concept including the inside or the outside of a building or a vehicle on the ground or a wearable type.

### <1-2. Premise of Present Embodiment>

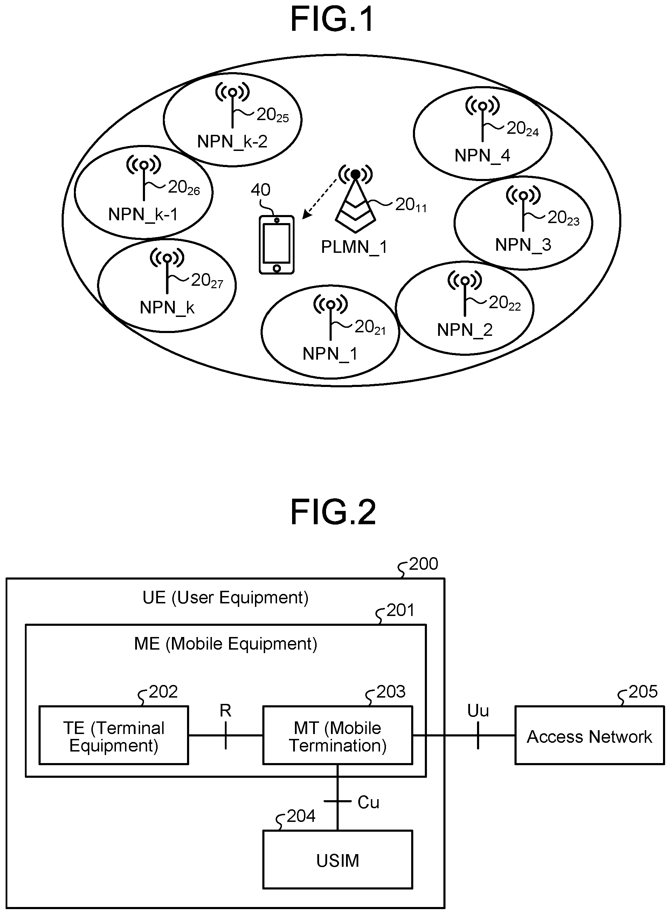

The premise of the present embodiment will be described with reference to FIGS. 1 and 2. First, a relationship between services of a public land mobile network (PLMN) and a non-public network (NPN) will be described with reference to FIG. 1. FIG. 1 is a diagram illustrating an example of the relationship between the PLMN service and the NPN service. Hereinafter, a provider that provides a communication service via a base station device 20₁₁ serving as a first base station device as the PLMN is referred to as a first provider. An ID (PLMN ID) for identifying the PLMN of the first provider is PLMN_1. Although FIG. 1 illustrates an example in which one base station device 20₁₁ is installed as the first base station device, the first provider provides a national-level communication service by using a plurality of base station devices. That is, the first provider provides a public wireless communication service.

In FIG. 1, k different providers provide local communication services as NPN operators. Although FIG. 1 illustrates a case where k is "7", k is not limited to "7" and may be a number of 8 or more or 6 or less. The local communication service here is, for example, a communication service in a limited area such as a commercial facility, a stadium, an arena, a hall, a theater, a club, an airport, or a convention center. That is, each NPN operator provides a local wireless communication service via a second base station device. Here, an example in which each NPN operator installs one base station device 20₂₁, 20₂₂, 20₂₃, 20₂₄, 20₂₅, 20₂₆, or 20₂₇ serving as the second base station device is illustrated, but each NPN operator may provide the local communication service by using a plurality of second base station devices. For example, NPN_1, which is an NPN operator providing a local wireless communication service by using the base station device 20₂₁, is not limited to using the base station device 20₂₁, and may provide the local communication service by using a plurality of second base station devices. In a case where the base station devices such as the base station devices 20₁₁ and 20₂₁ are described without being distinguished from each other, the base station devices may be collectively referred to as a base station device 20.

Furthermore, in FIG. 1, a wireless communication device 40 has a subscription contract with the first provider, and can use a communication service via the base station device 20₁₁. The wireless communication device 40 can make a subscription contract with each of k different NPN operators and use the local communication service provided by each NPN operator. For example, the wireless communication device 40 may be mounted with a subscriber identity module (SIM) card called a universal subscriber identity module (USIM) issued by each NPN operator, and select, and the SIM card may be selectively used according to a service to be used. The wireless communication device 40 may be configured to write or update a held content via a wireless network according to a service to be used in the form of an embedded SIM (eSIM) or an integrate SIM configured inside a System-on-a-chip (SoC).

For example, in a service area of each NPN operator, the wireless communication device 40 executes a registration procedure for a target NPN operator in addition to PLMN_1 and starts an operation corresponding to multi-SIM.

On the other hand, the number of NPN operators that provide the local communication service is expected to increase in the future, and in a case where the service of each NPN operator is local and the service of each NPN operator is temporarily used, the subscription contract with each NPN operator and the registration procedure may be complicated for a user. In addition, in a case where parameter communication for using the service of each NPN operator is frequently performed in accordance with a change in location of the wireless communication device 40, there is a concern that problems such as consumption of signaling overheads and radio resources and inefficient energy consumption by a device that performs communication such as the wireless communication device 40 occur.

In response to the above concern, for example, a method in which each of k different NPN operators enters into a roaming agreement or a service level agreement (SLA) with the first provider, and the wireless communication device 40 additionally uses the local communication service provided by each NPN operator on an on-demand basis under a subscription contract with the first provider may be used. In this case, the wireless communication device 40 can discover, register for, and use the local communication service provided by each NPN operator only when necessary.

Here, it is assumed that the wireless communication device 40 has a subscription contract with the first provider, but does not have a subscription contract in advance with any NPN operator. That is, it is assumed that the wireless communication device 40 is mounted with a SIM card called a USIM issued by the first provider. In the wireless communication device 40, a profile such as subscription data issued by the first provider may be downloaded to an embedded universal integrated circuit card (eUICC) of an eSIM or a memory area of an integrate SIM. Hereinafter, the SIM or USIM is used as a general name in order to simplify the description, but the SIM or USIM described herein also includes different forms of SIMs as described above.

Next, a functional model of a UE 200 serving as the wireless communication device 40 will be described with reference to FIG. 2. FIG. 2 is a diagram illustrating an example of a functional model of a UE serving as the wireless communication device.

The UE 200 includes functional blocks of a mobile equipment (ME) 201 and a USIM 204, and information is exchanged between the functional blocks of the ME 201 and the USIM 204 via a Cu interface. The functional block of the ME 201 is divided into functional blocks of a terminal equipment (TE) 202 and a mobile termination (MT) 203. The MT 203 is a block having a function related to wireless communication, and the TE 202 is a block having a function of an application or the like. The MT 203 and the TE 202 can be implemented in different hardware. The MT 203 is connected to an access network 205 including a radio access network (RAN) via a Uu interface.

When the wireless communication device 40 is powered on, the ME 201 acquires a PLMN list from the USIM 204. Since the wireless communication device 40 has a subscription contract with the first provider, PLMN_1, which is the PLMN ID of the first provider, is included in this PLMN list.

Before performing the registration procedure, the wireless communication device 40 performs PLMN selection and selects PLMN_1 as a home PLMN (HPLMN). Subsequently, the wireless communication device 40 selects the base station device 20₁₁ belonging to PLMN_1 by cell selection and starts the registration procedure.

The ME 201 may also acquire an equivalent PLMN list from the USIM 204. The equivalent PLMN list includes, for example, a PLMN ID of another provider having a roaming agreement with the first provider, in addition to the PLMN ID of the first provider. Here, the PLMN ID of the first provider is assigned a higher priority than the PLMN ID of another provider in the PLMN selection in the equivalent PLMN list.

Further, the PLMN ID of another provider may be a PLMN ID for identifying an NPN operator or a combination of a PLMN ID and a network identifier (NID). For example, the PLMN ID for identifying the NPN operator may be a PLMN ID based on a mobile country code (MCC) of 999 reserved for private use.

Hereinabove, the premise of the present embodiment has been described. Hereinafter, a communication system according to the present embodiment will be described in detail.

### <<2. Configuration of Communication System>>

### <2-1. Overall Configuration of Communication System>

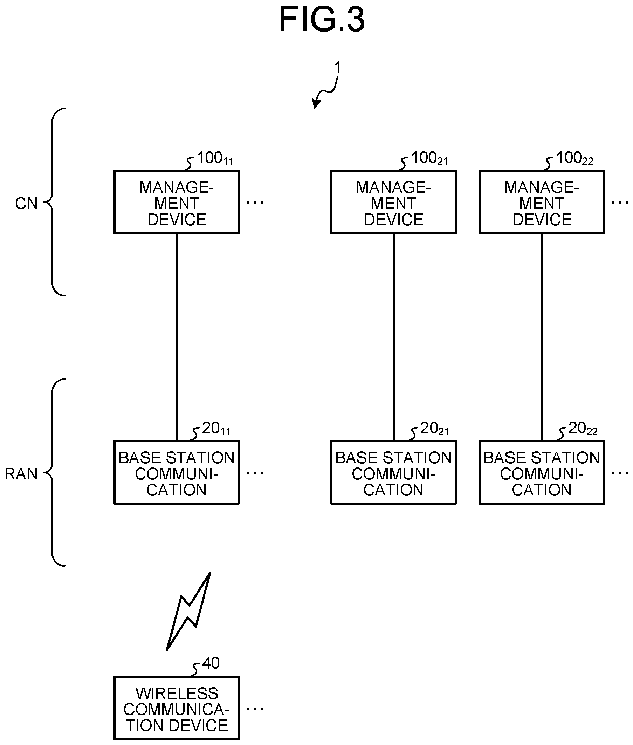

An outline of the communication system according to an embodiment of the present disclosure will be described with reference to FIG. 3. FIG. 3 is a diagram illustrating an example of a configuration of a communication system 1 according to an embodiment of the present disclosure. The communication system 1 is a wireless communication system that provides a radio access network to a wireless communication device. For example, the communication system 1 is a cellular communication system using a radio access technology such as LTE or NR. Here, the radio access network may be an evolved universal terrestrial radio access network (E-UTRAN) or a next generation radio access network (NG-RAN).

As illustrated in FIG. 3, the communication system 1 includes a management device 100, a base station device 20, and the wireless communication device 40. In the communication system 1, devices included in the communication system 1 operate in cooperation to provide a wireless network capable of mobile communication to a user. The wireless network of the present embodiment includes a radio access network RAN and a core network CN. The communication system 1 may include a relay device, and the base station device 20 may indirectly perform wireless communication with the wireless communication device 40 via the relay device. The relay device can be rephrased as a relay base station device (or a relay base station).

The communication system 1 includes a plurality of management devices 100, a plurality of base station devices 20, and a plurality of wireless communication devices 40. In the example of FIG. 3, the communication system 1 includes the management devices 100₁₁, 100₂₁, and 100₂₂, and the like as the management devices 100. Furthermore, the communication system 1 includes the base station devices 20₁₁, 20₂₁, and 20₂₂, and the like as the base station devices 20. The management device 100₁₁ is a management device 100 used by the first provider, and communicates with the base station device 20₁₁ serving as the first base station device to transmit and receive information. In addition, the management device 100₂₁ is a management device 100 used by NPN_1, which is an NPN operator, and communicates with the base station device 20₂₁ serving as the second base station device to transmit and receive information. In addition, the management device 100₂₂ is a management device 100 used by NPN_2, which is an NPN operator, and communicates with the base station device 20₂₂ serving as the second base station device to transmit and receive information. Although one wireless communication device 40 is illustrated in FIG. 3, the communication system 1 is not limited to having the wireless communication device 40 and includes a plurality of wireless communication devices.

Note that the devices in the drawing may be considered as devices in a logical sense. That is, some devices in the drawing may be implemented by a virtual machine (VM), a container, a docker, or the like, and may be implemented on the physically same hardware.

Note that a base station in the LTE may be referred to as an evolved node B (eNodeB) or an eNB. Further, a base station in the NR may be referred to as a next generation RAN node (NGRAN node), a gNodeB, or a gNB. In the LTE and NR, the wireless communication device (also referred to as a mobile station, a mobile station device, or a terminal) may be referred to as UE. Note that the wireless communication device is a type of communication device, and is also referred to as a mobile station, a mobile station device, or a terminal.

In the present embodiment, the concept of the communication device includes not only a portable mobile device (wireless communication device) such as a mobile terminal but also a device installed in a mobile body or the like. The mobile body or the like itself may be regarded as the communication device. In addition, the concept of the communication device includes not only a wireless communication device but also a base station device and a relay device. The communication device is a type of processing device and information processing device. Furthermore, the communication device can be rephrased as a transmission device or a reception device.

### <2-2. Configuration Example 1 of Network Architecture>

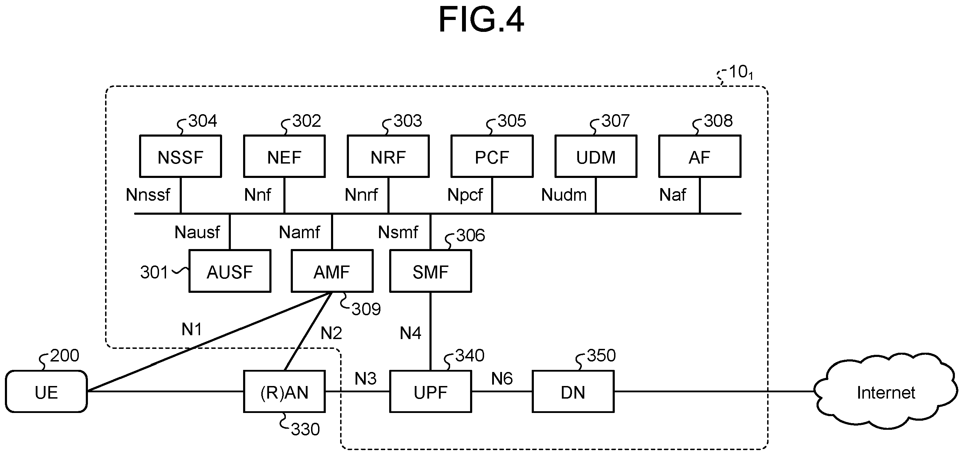

Next, an outline of a configuration of a network architecture of a 5G system (5GS) will be described with reference to FIG. 4. FIG. 4 is a diagram illustrating an example of a configuration of the network architecture.

The network architecture illustrated in FIG. 4 includes the UE 200, an (R)AN 330, and a core network 10₁. The core network 10₁ in FIG. 4 is, for example, a core network of the first provider. The (R)AN 330 and the core network 10₁ constitute a network of the first provider.

A control plane function group includes an authentication server function (AUSF) 301, a network exposure function (NEF) 302, a network repository function (NRF) 303, a network slice selection function (NSSF) 304, a policy control function (PCF) 305, a session management function (SMF) 306, a unified data management (UDM) 307, an application function (AF) 308, and an access and mobility management function (AMF) 309. The UDM 307 includes a unified data repository (UDR) that holds and manages subscriber information and a front end (FE) unit that processes the subscriber information. The AMF 309 performs mobility management, and the SMF 306 performs session management. A device that implements at least one function in the control plane function group described above is the management device 100 in FIG. 1. For example, the management device 100 implements the function of the AMF 309. The control plane functions may be implemented by different devices, or may be implemented by one or more devices. That is, a device configuration that implements the control plane functions may be an arbitrary device configuration. The function of the UDM 307 may be implemented by a management device (also referred to as a "contract information management device") different from the management device 100 that implements the function. In this case, the communication system 1 includes the contract information management device that implements the function of the UDM 307 including the UDR. In this case, the contract information management device is a server that manages information regarding a contract for the wireless communication device 40 to use a public wireless communication service.

Here, Namf is a service-based interface provided by the AMF 309. Nsmf is a service-based interface provided by the SMF 306. Nnef is a service-based interface provided by the NEF 302. Npcf is a service-based interface provided by the PCF 305. Nudm is a service-based interface provided by the UDM 307. Naf is a service-based interface provided by AF 308. Nnrf is a service-based interface provided by the NRF 303. Nnssf is a service-based interface provided by the NSSF 304. Nausf is a service-based interface provided by the AUSF 301. Each network function (NF) exchanges information with another NF via each service-based interface.

In addition, a user plane function (UPF) 340 has a user plane processing function. A data network (DN) 350 has a function of enabling connection to a mobile network operator (MNO), that is, a service unique to the first provider, the Internet, or a third-party service.

Further, the (R)AN 330 has a function of enabling connection to a RAN and connection to an access network (AN) other than the RAN. The (R)AN 330 includes a base station device called a gNB or an ng-eNB and corresponds to the base station device 20₁₁ serving as the first base station device.

Here, N1 is a reference point between the UE 200 and the AMF 309, N2 is a reference point between the (R)AN 330 and the AMF 309, N3 is a reference point between the (R)AN 330 and the UPF 340, N4 is a reference point between the SMF 306 and the UPF 340, and N6 is a reference point between the UPF 340 and the DN 350, and information is exchanged between the respective NFs.

In order for the UE 200 to be allowed to provide a service via a network including the (R)AN 330 and the core network 10₁, registration in the core network 10₁ is necessary. The UE 200 selects a PLMN corresponding to the core network 10₁ and performs the registration procedure.

### (Management Device)

Returning to FIG. 3, the description will be continued. The management device 100 is a device that manages a wireless network. For example, the management device 100 is a device that manages communication of the base station device 20. For example, the management device 100 is a device that functions as the AMF 309 or the SMF 306. The AMF 309 is connected to the NGRAN via an NG interface and controls non-access stratum (NAS) signaling with the UE 200 and manages mobility of the UE 200. Furthermore, for example, the management device 100 may function as a mobility management entity (MME) in the LTE. The MME is connected to an enhanced universal terrestrial RAN (EUTR_AN) via an S1 interface, and controls NAS signaling with the UE 200 and manages mobility of the UE 200.

The management device 100 may also be included in the core network CN together with a gateway device and the like. The core network CN is, for example, a network of a predetermined entity such as a mobile communication operator. For example, the core network CN is a 5G core network (5GC). The 5GC is also referred to as a next generation core (NGC). The core network CN may be an evolved packet core (EPC). Note that the predetermined entity may be the same as or different from an entity that uses, operates, and/or manages the base station device 20.

The core network CN may include a user plane (U-plane) node that transfers user data between a packet data network (PDN) or a data network (DN) and the RAN, in addition to a control plane (C-plane) node such as the management device 100. The U-plane node in the 5GC may include the UPF 340. In addition, in a case of the EPC, the U-plane node may include a serving gateway (S-GW) or a PDN-Gateway (P-GW). For example, the management device 100 manages the location of each wireless communication device 40 in the communication system 1 in units of areas (for example, tracking area and RAN notification area) including a plurality of cells. Note that the management device 100 may grasp and manage, for each wireless communication device 40, which base station (or which cell) the wireless communication device 40 is connected to, which base station (or which cell) the wireless communication device 40 exists in a communication area, and the like in units of cells.

Note that the management device 100 may have a function of a gateway. For example, in a case where the core network CN is the 5GC, the management device 100 may have a function as the UPF 340. Further, the management device 100 may be the SMF 306, the PCF 305, the UDM 307, or the like. For example, in a case where the core network CN is the EPC, the management device 100 may have a function as the S-GW or the P-GW.

Note that the management device 100 does not necessarily have to be a device included in the core network CN. For example, it is assumed that the core network CN is a core network of wideband code division multiple access (W-CDMA) or code division multiple access 2000 (cdma2000). At this time, the management device 100 may be a device that functions as a radio network controller (RNC).

The management device 100 is connected to a corresponding base station device 20. For example, the management device 100₁₁ is connected to the base station device 20₁₁. In addition, the management device 100₂₁ is connected to the base station device 20₂₁. For example, in a case of the 5G system (5GS), an N2 reference point exists between the AMF 309 and the NG-RAN, and the AMF 309 and the NG-RAN are logically connected to each other via the NG interface.

The management device 100 manages communication of the base station device 20. For example, the management device 100 manages the location of each wireless communication device 40 in units of areas (for example, tracking area and RAN notification area) including a plurality of cells. Note that the management device 100 may grasp and manage, for each wireless communication device 40, which base station device (or which cell) the wireless communication device 40 is connected to, which base station device (or which cell) the wireless communication device 40 exists in a communication area, and the like.

### (Base Station Device)

The base station device 20 is a wireless communication device that performs wireless communication with the wireless communication device 40. The base station device 20 is a type of communication device. The base station device 20 is a type of information processing device.

The base station device 20 may be, for example, a device corresponding to a wireless base station (Node B, eNB, gNB, or the like) or a radio access point. In a case where the base station device 20 is an eNB, a gNB, or the like, the base station device 20 may be referred to as a 3GPP access. In addition or instead, in a case where the base station device 20 is a radio access point, the base station device 20 may be referred to as a non-3GPP access. The base station device 20 may also be a wireless relay station (relay node). Furthermore, the base station device 20 may be an optical feeder device which is called a remote radio head (RRH). The base station device 20 may also be a receiving station device such as a field pickup unit (FPU). Furthermore, the base station device 20 may be an integrated access and backhaul (IAB) donor node or IAB relay node that provides a radio access line and a radio backhaul line by time division multiplexing, frequency division multiplexing, or space division multiplexing.

In a case where the base station device 20 is a gNB, the base station device 20 may be referred to as a combination of a gNB central unit (CU) and a gNB distributed unit (DU) or any of them. In the present embodiment, the base station of the wireless communication system may be referred to as the base station device. The base station device 20 may be configured to be able to perform wireless communication with another base station device 20. For example, in a case where a plurality of base station devices 20 are eNBs or a combination of eNBs and gNBs, the devices may be connected by an X2 interface. Further, in a case where a plurality of base station devices 20 are gNBs or a combination of eNBs and gNBs, the devices may be connected by an Xn interface. Further, in a case where a plurality of base station devices 20 are a combination of gNB CUs and gNB DUs, the devices may be connected by an F1 interface.

Note that a radio access technology used by the base station device 20 may be a cellular communication technology or wireless LAN technology. It is a matter of course that the radio access technology used by the base station device 20 is not limited thereto, and may be another radio access technology. The radio access technology used by the base station device 20 may be a low power wide area (LPWA) communication technology. Here, LPWA communication is communication conforming to a LPWA standard. Examples of the LPWA standard include ELTRES, ZETA, SIGFOX, LoRaWAN, enhanced machine type communication (eMTC), and NB-IoT. It is a matter of course that the LPWA standard is not limited thereto, and may be other LPWA standards. In addition, wireless communication used by the base station device 20 may be wireless communication using millimeter waves. Further, the wireless communication used by the base station device 20 may be wireless communication using radio waves or (optical) wireless communication using infrared rays or visible light.

The base station device 20 may be capable of non-orthogonal multiple access (NOMA) communication with the wireless communication device 40. Here, the NOMA communication is communication (transmission, reception, or both) using a non-orthogonal resource. The base station device 20 may be configured to be able to perform the NOMA communication with another base station device 20 and a relay device.

Note that the base station devices 20 may be able to communicate with each other via a base station device-core network interface (for example, S1 interface). This interface may be either a wired interface or a wireless interface. The base station devices may be able to communicate with each other via an inter-base station device interface (for example, X2 interface or S1 interface). This interface may be either a wired interface or a wireless interface.

Note that the plurality of base station devices 20 may be able to communicate with each other via a base station device-core network interface (for example, NG interface or S1 interface). This interface may be either a wired interface or a wireless interface. The base station devices may be able to communicate with each other via an inter-base station device interface (for example, Xn interface or X2 interface). This interface may be either a wired interface or a wireless interface.

Further, the base station device 20 may be implemented by a set of a plurality of physical or logical devices. For example, in the present embodiment, the base station is classified into a plurality of devices including a baseband unit (BBU) and a radio unit (RU), and may be interpreted as a set of these plurality of devices. In addition or instead, in an embodiment of the present disclosure, the base station may be either or both of the BBU and the RU. The BBU and the RU may be connected by a predetermined interface (for example, eCPRI). In addition or instead, the RU may be referred to as a remote radio unit (RRU) or a Radio DoT (RD). In addition or instead, the RU may correspond to a gNB-DU described below. In addition or instead, the BBU may correspond to a gNB-CU described below. In addition or instead, the RU may be a device integrally formed with an antenna. An antenna of the base station (for example, the antenna integrally formed with the RU) may adopt an advanced antenna system and support MIMO (for example, FD-MIMO) or beamforming. In the advanced antenna system, the antenna of the base station (for example, the antenna integrally formed with the RU) may include, for example, 64 transmission antenna ports and 64 reception antenna ports. In addition, the antenna mounted on the RU may be an antenna panel including one or more antenna elements, and the RU may be mounted with one or more antenna panels. For example, the RU may be mounted with two types of antenna panels including a horizontal polarization antenna panel and a vertical polarization antenna panel, or two types of antenna panels including a clockwise circular polarization antenna panel and a counterclockwise circular polarization antenna panel. In addition, the RU may form and control an independent beam for each antenna panel.

A plurality of base station devices 20 may be connected to each other. One or more base station devices 20 may be included in a radio access network (RAN). That is, the base station may be simply referred to as a RAN, a RAN node, an access network (AN), or an AN node. The RAN in the LTE is referred to as an enhanced universal terrestrial RAN (EUTRAN). The RAN in the NR is referred to as an NGRAN. The RAN in W-CDMA (UMTS) is referred to as a UTRAN.

Note that a base station in the LTE may be referred to as an evolved node B (eNodeB) or an eNB. That is, the EUTR_AN includes one or more eNodeBs (eNBs). Further, a base station in the NR may be referred to as a gNodeB or a gNB. That is, the NGR_AN includes one or more gNBs. Further, the EUTR_AN may include a gNB (en-gNB) connected to the core network (EPC) in the communication system (EPS) of the LTE. Similarly, the NGR_AN may include an ng-eNB connected to the core network (5GC) in the 5G communication system (5GS).

In addition, in a case where the base station is an eNB, a gNB, or the like, the base station may be referred to as a 3GPP access. In addition, in a case where the base station is a radio access point, the base station may be referred to as a non-3GPP access. Furthermore, the base station may be an optical feeder device which is called a remote radio head (RRH). In addition or instead, in a case where the base station is a gNB, the base station may be referred to as a combination of a gNB central unit (CU) and a gNB distributed unit (DU) described above or any of them.

The gNB central unit (CU) hosts a plurality of higher layers (for example, radio resource control (RRC), service data adaptation protocol (SDAP), and PDCP) of the access stratum for communication with the UE. On the other hand, the gNB-DU hosts a plurality of lower layers (for example, RLC, MAC, and PHY) of the access stratum. That is, among messages and information to be described later, RRC signaling (semi-static notification) may be generated by the gNB CU, and downlink control information (DCI) may be generated by the gNB-DU as dynamic notification. Alternatively, in an RRC configuration (semi-static notification), for example, some configurations such as cellGroupConfig information elements (IEs) may be generated by the gNB-DU, and the remaining configurations may be generated by the gNB-CU. These configurations may be transmitted and received by the F1 interface.

The base station device 20 may be configured to be able to perform communication with another base station device 20. For example, in a case where a plurality of base station devices 20 are eNBs or a combination of eNBs and en-gNBs, the base station devices 20 may be connected by an X2 interface. Furthermore, in a case where a plurality of base station devices 20 are gNBs or a combination of gn-eNBs and gNBs, the devices may be connected by an Xn interface. In addition, in a case where a plurality of base station devices 20 are a combination of gNB central units (CUs) and gNB distributed units (DUs), the devices may be connected by the above-described F1 interface. The messages and information (RRC signaling or DCI information) may be communicated between a plurality of base stations (for example, via the X2, Xn, or F1 interface).

The base station device 20 may be used, operated, and/or managed by various entities. For example, the entity may be assumed to be a mobile network operator (MNO), a mobile virtual network operator (MVNO), a mobile virtual network enabler (MVNE), a neutral host network (NHN) provider, a non-public network provider, an enterprise, an educational institution (an educational institution, a board of a local government, or the like), a real estate (building, apartment, or the like) administrator, an individual, or the like.

It is a matter of course that the entity of the use, operation, and/or management of the base station device 20 is not limited thereto. The base station device 20 may be installed and/or operated by one provider, or may be installed and/or operated by one individual. It is a matter of course that the entity who installs/operates the base station device 20 is not limited thereto. For example, the base station device 20 may be jointly installed/operated by a plurality of providers or a plurality of individuals. Further, the base station device 20 may be a shared facility used by a plurality of providers or a plurality of individuals. In this case, the installation and/or operation of the facility may be carried out by a third party different from the user.

Note that the concept of the base station device (also referred to as the base station) includes not only a donor base station but also a relay base station (also referred to as a relay station, a relay base station, or a relay station device). Further, the concept of the base station includes not only a structure having the function of the base station, but also a device installed in the structure.

The structure is, for example, a building such as a skyscraper, a house, a steel tower, a station facility, an airport facility, a port facility, or a stadium. Note that the concept of the structure includes not only a building, but also a non-building structure such as a tunnel, a bridge, a dam, a fence, or a steel column, or a facility such as a crane, a gate, or a windmill. In addition, the concept of the structure includes not only a structure on land (on the ground in a narrow sense) or in the ground, but also a structure on the water, such as a landing stage or Mega-Float, or a structure underwater such as an oceanographical observation facility. The base station device can be rephrased as a processing device or an information processing device.

The base station device 20 may be a donor station or a relay station. Furthermore, the base station device 20 may be a fixed station or a mobile station. The mobile station is a wireless communication device (for example, the base station device) configured to be movable. Here, the base station device 20 may be a device installed on a mobile body, or may be the mobile body itself. For example, a relay station device having mobility can be regarded as the base station device 20 as the mobile station. In addition, a device that originally has mobility, such as a vehicle, an unmanned aerial vehicle (UAV) typified by a drone, or a smartphone, and has the function of the base station device (at least a part of the function of the base station device) also corresponds to the base station device 20 as the mobile station.

Here, the mobile body may be a mobile terminal such as a smartphone or a mobile phone. The mobile body may be a mobile body (for example, a vehicle such as an automobile, a bicycle, a bus, a truck, a motorcycle, a train, or a linear motor car) that moves on land (on the ground in a narrow sense), or may be a mobile body (for example, subway) that moves in the ground (for example, in a tunnel).

Further, the mobile body may be a mobile body (for example, a vessel such as a passenger ship, a cargo ship, or a hovercraft) that moves on the water, or may be a mobile body (for example, a submersible boat such as a submersible, a submarine, or an unmanned underwater vehicle) that moves underwater.

Further, the mobile body may be a mobile body (for example, an aerial vehicle such as an airplane, an airship, or a drone) that moves in the atmosphere, or may be a mobile body (for example, an artificial celestial body such as an artificial satellite, a spaceship, a space station, a space probe) that moves outside the atmosphere. The mobile body that moves outside the atmosphere can be rephrased as a space mobile body.

Furthermore, the base station device 20 may be a ground base station device (ground station device) installed on the ground. For example, the base station device 20 may be a base station device arranged in a structure on the ground, or may be a base station device installed in a mobile body moving on the ground. More specifically, the base station device 20 may be an antenna installed in a structure such as a building and a signal processing device connected to the antenna. It is a matter of course that the base station device 20 may be a structure or a mobile body itself. The phrase "on the ground" not only means on land (on the ground in a narrow sense), but also means in the ground, on the water, and underwater in a broad sense. Note that the base station device 20 is not limited to the ground base station device. The base station device 20 may be a non-ground base station device (non-ground station device) capable of floating in the air or space. For example, the base station device 20 may be an aircraft station device or a satellite station device.

The aircraft station device is a wireless communication device capable of floating in the atmosphere (including the stratosphere), such as an aerial vehicle. The aircraft station device may be a device mounted on an aerial vehicle or the like, or may be the aerial vehicle itself. Note that the concept of the aerial vehicle includes not only a heavy aerial vehicle such as an airplane or a glider, but also a light aerial vehicle such as a balloon or an airship. Further, the concept of the aerial vehicle includes not only the heavy aerial vehicle and the light aerial vehicle, but also a rotary-wing aerial vehicle such as a helicopter or an autogyro. Note that the aircraft station device (or the aerial vehicle on which the aircraft station device is mounted) may be an unmanned aerial vehicle (UAV) such as a drone. Note that, in a case where the aircraft station device functions as a user equipment (UE), the aircraft station device may be an aerial UE.

Note that the concept of the unmanned aerial vehicle also includes an unmanned aircraft system (UAS) and a tethered UAS. The concept of the unmanned aerial vehicle also includes a Lighter than Air UAS (LTA) and a Heavier than Air UAS (HTA). In addition, the concept of the unmanned aerial vehicle also includes high altitude UAS platforms (HAPs).

The satellite station device is a wireless communication device capable of floating outside the atmosphere. The satellite station device may be a device mounted on a space mobile body such as an artificial satellite, or may be the space mobile body itself. A satellite that serves as the satellite station device may be any one of a low earth orbiting (LEO) satellite, a medium earth orbiting (MEO) satellite, a geostationary earth orbiting (GEO) satellite, or a highly elliptical orbiting (HEO) satellite. It is a matter of course that the satellite station device may be a device mounted on the LEO satellite, the MEO satellite, the GEO satellite, or the HEO satellite.

The size of the coverage of the base station device 20 may be large like a macro cell or may be small like a picocell. It is a matter of course that the size of the coverage of the base station device 20 may be extremely small like a femtocell. Further, the base station device 20 may have a beamforming capability. In this case, the base station device 20 may form a cell or a service area for each beam.

A cell provided by the base station device 20 is called a serving cell. The serving cell may include a primary cell (pCell) and a secondary cell (sCell). In a case where dual connectivity is provided to the UE (for example, the wireless communication device 40), the pCell and the sCell(s) provided by a master node (MN) are referred to as a master cell group. Examples of the dual connectivity include EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity.

Further, the serving cell may include a primary secondary cell or a primary SCG Cell (PSCell). That is, in a case where the dual connectivity is provided to the UE, the PSCell and the sCell(s) provided by a secondary node (SN) are referred to as a secondary cell group (SCG).

One downlink component carrier and one uplink component carrier may be associated with one cell. Further, a system bandwidth corresponding to one cell may be divided into a plurality of bandwidth parts (BWPs). In this case, one or more bandwidth parts (BWPs) may be configured for the UE and one bandwidth part may be used for the UE as an active BWP. Further, radio resources (for example, a frequency band, numerology (subcarrier spacing), and slot configuration) that can be used by the wireless communication device 40 may be different for each cell, each component carrier, or each BWP. Further, one base station device may provide a plurality of cells.

### (Wireless Communication Device)

The wireless communication device 40 is a terminal device that wirelessly communicates with the base station device 20 or the relay device. The wireless communication device 40 is, for example, a mobile phone, a smart device (smartphone or tablet PC), a personal digital assistant (PDA), or a personal computer. Furthermore, the wireless communication device 40 may be a device such as a business camera having a communication function, or may be a motorcycle, a moving relay vehicle, or the like on which a communication device such as a field pickup unit (FPU) is mounted. Furthermore, the wireless communication device 40 may be a machine-to-machine (M2M) device or an Internet of Things (IoT) device. The wireless communication device 40 may be referred to as, for example, an MTC UE, an NB-IoT UE, or a Cat. M UE. The wireless communication device may also be referred to as a mobile station (MS) or a wireless transmission reception unit (WTRU).

Furthermore, the wireless communication device 40 may be able to perform sidelink communication with another wireless communication device 40. The wireless communication device 40 may be able to use an automatic retransmission technology such as HARQ when performing sidelink communication. The wireless communication device 40 may be able to perform the NOMA communication with the base station device 20 and the relay device. The wireless communication device 40 may also be able to perform the NOMA communication for communication (sidelink) with another wireless communication device 40. Furthermore, the wireless communication device 40 may be able to perform LPWA communication with another communication device (for example, the base station device 20, the relay device, or another wireless communication device 40). In addition, wireless communication used by the wireless communication device 40 may be wireless communication using millimeter waves. Note that the wireless communication (including the sidelink communication) used by the wireless communication device 40 may be wireless communication using radio waves or may be (optical) wireless communication using infrared rays or visible light.

Furthermore, the wireless communication device 40 may be a mobile device. Here, the mobile device is a movable wireless communication device. Here, the wireless communication device 40 may be a wireless communication device installed on a mobile body, or may be the mobile body itself. For example, the wireless communication device 40 may be a vehicle that moves on a road, such as an automobile, a bus, a truck, or a motorcycle, or a wireless communication device mounted on the vehicle. Note that the mobile body may be a mobile terminal, or may be a mobile body that moves on land (on the ground in a narrow sense), in the ground, on water, or under water. Furthermore, the mobile body may be a mobile body that moves inside the atmosphere, such as a drone (aerial UE) or a helicopter, or may be a mobile body that moves outside the atmosphere, such as an artificial satellite.

The wireless communication device 40 may be simultaneously connected to a plurality of base station devices or a plurality of cells to perform communication. For example, in a case where one base station device can provide a plurality of cells, the wireless communication device 40 may perform carrier aggregation by using one cell as the pCell and using another cell as the sCell. Furthermore, in a case where a plurality of base station devices 20 can respectively provide one or more cells, the wireless communication device 40 can implement dual connectivity (DC) by using one or more cells managed by one base station device (for example, MeNB or MgNB) that is the master node (MN) as the pCell or the pCell and the sCell(s), and by using one or more cells managed by the other base station device (for example, SeNB or SgNB) that is the secondary node (SN) as the pCell or the pCell and the sCell(s). The DC may be referred to as multi-connectivity (MC).

For example, in a case of supporting a communication area via cells (a plurality of cells having different cell identifiers or the same identifier) of different base station devices 20, it is possible to bundle the plurality of cells and enable communication between the base station device 20 and the wireless communication device 40 by using a carrier aggregation (CA) technology, a dual connectivity (DC) technology, or a multi-connectivity (MC) technology. Alternatively, the wireless communication device 40 and the plurality of base station devices 20 can perform communication with each other by using coordinated multi-point transmission and reception (CoMP) technology via cells of different base station devices 20.

Note that the wireless communication device 40 is not necessarily a device directly used by a person. The wireless communication device 40 may be a sensor installed in a machine of a factory like so-called machine type communication (MTC). Furthermore, the wireless communication device 40 may be a machine-to-machine (M2M) device or an Internet of Things (IoT) device. Furthermore, the wireless communication device 40 may be a device having a relay communication function as represented by device-to-device (D2D) and vehicle-to-everything (V2X). Further, the wireless communication device 40 may be a device that is called client premises equipment (CPE) used in a wireless backhaul or the like.

Hereinafter, a configuration of each device included in the communication system 1 according to an embodiment will be specifically described. Note that the configuration of each device described below is merely an example. The configuration of each device may be different from the following configuration.

### <2-3. Configuration of Management Device>

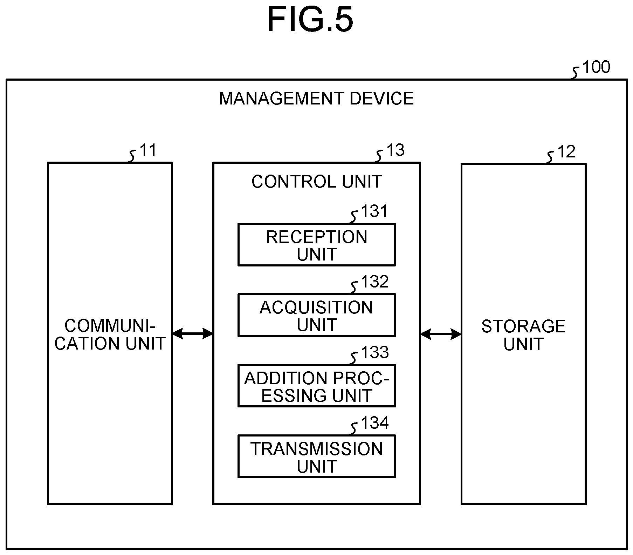

FIG. 5 is a diagram illustrating an example of a configuration of the management device 100 according to an embodiment of the present disclosure. The management device 100 is a device that manages a wireless network. The management device 100 includes a communication unit 11, a storage unit 12, and a control unit 13. Note that the configuration illustrated in FIG. 5 is a functional configuration, and a hardware configuration may be different from this. Further, the functions of the management device 100 may be distributed to and implemented in a plurality of physically separated components. For example, the management device 100 may be implemented by a plurality of server devices.

The communication unit 11 is a communication interface for performing communication with another device. The communication unit 11 may be a network interface or may be a device connection interface. For example, the communication unit 11 may be a local area network (LAN) interface such as a network interface card (NIC), or may be a universal serial bus (USB) interface including a USB host controller, a USB port, and the like. Further, the communication unit 11 may be a wired interface or a wireless interface. The communication unit 11 functions as communication means of the management device 100. The communication unit 11 performs communication with the base station device 20 under the control of the control unit 13.

The storage unit 12 is a storage device, from which data can be read and in which data can be written, such as a dynamic random access memory (DRAM), a static random access memory (SRAM), a flash memory, or a hard disk. The storage unit 12 functions as storage means of the management device 100. The storage unit 12 stores, for example, a connection state of the wireless communication device 40. For example, the storage unit 12 stores a radio resource control (RRC) state, a 5GS connection management (5GS CM) state, or an EPS connection management (ECM) state of the wireless communication device 40. The storage unit 12 may function as a home memory that stores location information of the wireless communication device 40.

The control unit 13 is a controller that controls each unit of the management device 100. The control unit 13 is implemented by, for example, a processor such as a central processing unit (CPU) or a micro processing unit (MPU). For example, the control unit 13 is implemented in a manner in which the processor executes various programs stored in the storage device inside the management device 100 by using a random access memory (RAM) or the like as a work area. Note that the control unit 13 may be implemented by an integrated circuit such as an application specific integrated circuit (ASIC) or a field programmable gate array (FPGA). The CPU, the MPU, the ASIC, and the FPGA can all be regarded as the controller.

As illustrated in FIG. 5, the control unit 13 includes a reception unit 131, an acquisition unit 132, an addition processing unit 133, and a transmission unit 134, and implements or executes a function and an action of communication processing such as information transmission to the wireless communication device 40 as described below. These functional blocks may be software blocks or hardware blocks. For example, each of the above-described functional blocks may be one software module implemented by software (including a microprogram) or may be one circuit block on a semiconductor chip (die). It is a matter of course that each functional block may be one processor or one integrated circuit. A method of configuring the functional block is arbitrary.

The reception unit 131 receives information from a device such as the base station device 20. The reception unit 131 receives information from the wireless communication device 40 via the base station device 20. The reception unit 131 receives, from the wireless communication device 40, a request for updating first information for selecting a service provided by a public wireless communication service.

The reception unit 131 receives a request including information regarding the location of the wireless communication device 40. The reception unit 131 receives information regarding the location of the wireless communication device 40 measured by a device other than the wireless communication device 40 (such as a device that implements a function of a location management function (LMF) to be described later).

The reception unit 131 receives, from the wireless communication device 40, a registration request including information corresponding to one service specified from second information for selecting one service from among one or more services provided by a local wireless communication service included in third information. The reception unit 131 receives a session establishment request including information for selecting one service for which registration is accepted.

The addition processing unit 133 performs processing for adding the second information to the first information. In response to a request from the wireless communication device 40, the transmission unit 134 transmits, to the wireless communication device 40, the third information obtained by adding, to the first information, the second information for selecting a service provided by a local wireless communication service. The addition processing unit 133 may generate the third information by adding the second information to the first information.

The addition processing unit 133 requests another device such as a contract information device to add the second information to the first information, and acquires, from the another device, the third information obtained by adding the second information to the first information. For example, in a case where the contract information management device is included in the communication system 1, the addition processing unit 133 transfers a request for updating the first information from the wireless communication device 40 to the contract information management device. The reception unit 131 receives the third information generated by the contract information management device from the contract information management device. In this case, the transmission unit 134 notifies the wireless communication device 40 of an instruction to update the first information to the third information by using an NAS message including the third information received from the contract information management device.

The addition processing unit 133 receives, from the contract information management device, an instruction to cause the wireless communication device 40 to perform processing for updating the first information to the third information. The addition processing unit 133 receives a registration request including information corresponding to one service among one or more services provided by a local wireless communication service from the wireless communication device, and requests a contract information management device for subscription related to the one service included in the registration request. In this case, the contract information management device manages permission of subscription related to one service for which the wireless communication device 40 has requested for registration, based on a request from the management device 100. The addition processing unit 133 accepts registration of the wireless communication device 40 for one service according to a response from the contract information management device to accept the subscription related to the one service.

The transmission unit 134 transmits information to a device such as the base station device 20. The transmission unit 134 transmits information to the wireless communication device 40 via the base station device 20. The transmission unit 134 transmits the NAS message including the third information to the wireless communication device 40. The transmission unit 134 transmits, to the wireless communication device 40, the third information obtained by adding the second information specified based on the information regarding the location of the wireless communication device 40 to the first information. The transmission unit 134 transmits, to the wireless communication device 40, the third information obtained by adding the second information specified based on the information regarding the location received by the reception unit 131 to the first information.

The transmission unit 134 transmits, to the wireless communication device 40, the third information obtained by adding the second information specified based on the information regarding the location measured by another device to the first information. The transmission unit 134 instructs the wireless communication device 40 to perform handover from the first base station device that provides a public wireless communication service to the second base station device that provides a local wireless communication service.

The transmission unit 134 instructs the wireless communication device 40 to perform processing of establishing dual connectivity in which the first base station device that provides a public wireless communication service is the master cell group and the second base station device that provides a local wireless communication service is the secondary cell group. The transmission unit 134 transmits the third information obtained by adding the second information to the first information by the addition processing unit 133 to the wireless communication device 40.

### <2-4. Configuration of Base Station Device>

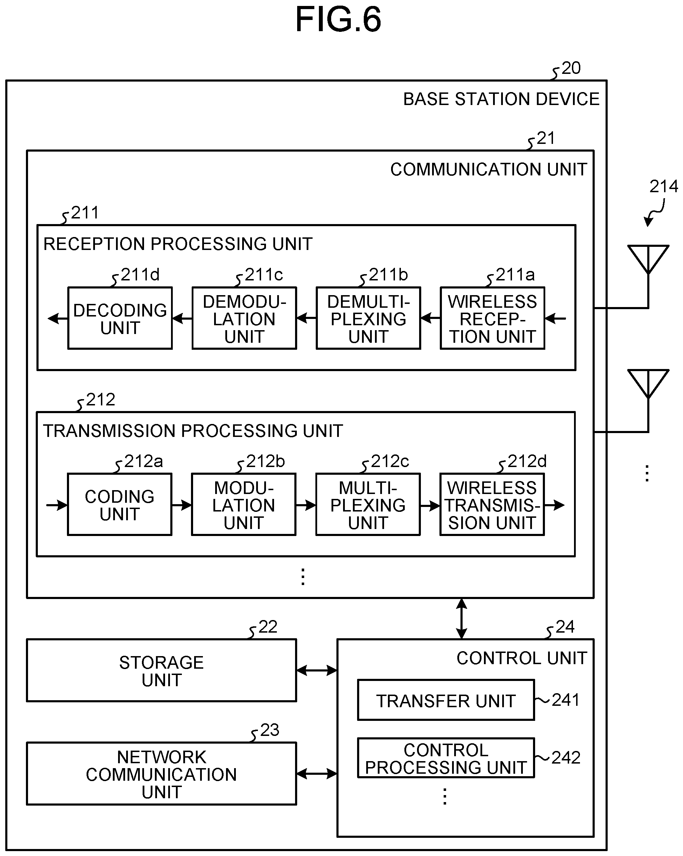

Next, a configuration of the base station device 20 will be described. FIG. 6 is a diagram illustrating an example of the configuration of the base station device 20 according to an embodiment of the present disclosure. The base station device 20 can operate in a frequency division duplex (FDD) mode or a time division duplex (TDD) mode. In addition, the base station device 20 can simultaneously perform data transmission and data reception by using the same band. For example, the base station device 20 can perform in-band full-duplex communication with the wireless communication device 40 and another wireless communication device such as a relay device. The base station device 20 may be able to perform the NOMA communication with another wireless communication device.

The base station device 20 includes a communication unit 21, a storage unit 22, a network communication unit 23, and a control unit 24. Note that the configuration illustrated in FIG. 6 is a functional configuration, and a hardware configuration may be different from this. Further, the functions of the base station device 20 may be distributed to and implemented in a plurality of physically separated components.

The communication unit 21 is a signal processing unit for wirelessly communicating with another wireless communication device (for example, the wireless communication device 40, a relay device, or another base station device 20). The communication unit 21 can operate in the FDD mode or TDD mode. Furthermore, the communication unit 21 can simultaneously perform data transmission and data reception using the same band. For example, the base station device 20 can perform in-band full-duplex communication with the wireless communication device 40 and another communication device such as a relay device. The communication unit 21 operates under the control of the control unit 24. The communication unit 21 supports one or more radio access schemes. For example, the communication unit 21 supports both NR and LTE. The communication unit 21 may support W-CDMA or cdma2000 in addition to NR or LTE. Furthermore, the communication unit 21 may support the NOMA communication.

The communication unit 21 includes a reception processing unit 211, a transmission processing unit 212, and an antenna 214. The communication unit 21 may include a plurality of reception processing units 211, a plurality of transmission processing units 212, and a plurality of antennas 214. Note that, in a case where the communication unit 21 supports a plurality of radio access schemes, each unit of the communication unit 21 can be individually configured for each radio access scheme. For example, the reception processing unit 211 and the transmission processing unit 212 may be individually configured for each of LTE and NR.

The reception processing unit 211 processes an uplink signal received via the antenna 214. The reception processing unit 211 includes a wireless reception unit 211a, a demultiplexing unit 211b, a demodulation unit 211c, and a decoding unit 211d.

The wireless reception unit 211a performs, on the uplink signal, down-conversion, removal of an unnecessary frequency component, a control of an amplification level, quadrature demodulation, conversion into a digital signal, removal of a guard interval (cyclic prefix), extraction of a frequency domain signal by fast Fourier transform, and the like. The demultiplexing unit 211b separates an uplink channel such as a physical uplink shared channel (PUSCH) or physical uplink control channel (PUCCH) and an uplink reference signal from a signal output from the wireless reception unit 211a. The demodulation unit 211c performs demodulation of a reception signal for a modulation symbol of the uplink channel by using a modulation scheme such as binary phase shift keying (BPSK) or quadrature phase shift keying (QPSK). The modulation scheme used by the demodulation unit 211c may be 16-quadrature amplitude modulation (QAM), 64-QAM, or 256-QAM. In this case, signal points on constellation do not necessarily have to be equidistant. The constellation may be non-uniform constellation (NUC). The decoding unit 211d performs decoding processing on a coded bit of the demodulated uplink channel. Decoded uplink data and uplink control information are output to the control unit 24.

The transmission processing unit 212 performs transmission processing of downlink control information and downlink data. The transmission processing unit 212 includes a coding unit 212a, a modulation unit 212b, a multiplexing unit 212c, and a wireless transmission unit 212d.

The coding unit 212a codes the downlink control information and the downlink data input from the control unit 24 by using a coding method such as block coding, convolutional coding, or turbo coding. The coding unit 212a may perform coding with a polar code and coding with a low density parity check code (LDPC code). The modulation unit 212b modulates the coded bit output from the coding unit 212a by a predetermined modulation scheme such as BPSK, QPSK, 16-QAM, 64-QAM, or 256-QAM. In this case, signal points on constellation do not necessarily have to be equidistant. The constellation may be non-uniform constellation. The multiplexing unit 212c multiplexes a modulation symbol of each channel and a downlink reference signal, and maps them to a predetermined resource element. The wireless transmission unit 212d performs various kinds of signal processing on a signal from the multiplexing unit 212c. For example, the wireless transmission unit 212d performs processing such as conversion into the frequency domain by fast Fourier transform, addition of a guard interval (cyclic prefix), generation of a baseband digital signal, conversion into an analog signal, quadrature modulation, up-conversion, removal of extra frequency components, or power amplification. A signal generated by the transmission processing unit 212 is transmitted from the antenna 214.

The storage unit 22 is a storage device, from which data can be read and in which data can be written, such as a DRAM, an SRAM, a flash memory, or a hard disk. The storage unit 22 functions as storage means of the base station device 20.

The network communication unit 23 is a communication interface for performing communication with a node located higher on the network (for example, the management device 100). For example, the network communication unit 23 is a LAN interface such as an NIC. Further, the network communication unit 23 may be a wired interface or a wireless interface. The network communication unit 23 functions as network communication means of the base station device 20.

The control unit 24 is a controller that controls each unit of the base station device 20. The control unit 24 is implemented by, for example, a processor (hardware processor) such as a central processing unit (CPU) or a microprocessing unit (MPU). For example, the control unit 24 is implemented in a manner in which the processor executes various programs stored in the storage device inside the base station device 20 by using a RAM or the like as a work area. Note that the control unit 24 may be implemented by an integrated circuit such as an ASIC or a FPGA. The CPU, the MPU, the ASIC, and the FPGA can all be regarded as the controller.

As illustrated in FIG. 6, the control unit 24 includes a transfer unit 241 and a control processing unit 242. These functional blocks may be software blocks or hardware blocks. For example, each of the above-described functional blocks may be one software module implemented by software (including a microprogram) or may be one circuit block on a semiconductor chip (die). It is a matter of course that each functional block may be one processor or one integrated circuit. A method of configuring the functional block is arbitrary.

The transfer unit 241 performs transfer processing by transmitting information received from one device to another device. The transfer unit 241 transfers the NAS message received from the wireless communication device 40 or the management device 100 that manages radio access and mobility to the management device 100 or the wireless communication device 40. The transfer unit 241 receives a first NAS message including a protocol data unit (PDU) session establishment request for one service provided by an NPN provider within a coverage of its own base station device 20 from the wireless communication device 40.

The transfer unit 241 receives a second NAS message including a closed access group (CAG) ID of the second base station device from the management device 100, and transfers the second NAS message to the wireless communication device 40. The transfer unit 241 transfers an instruction to perform handover from the own base station device 20 to the second base station device as an instruction for establishing radio access between the second base station device and the wireless communication device 40. The transfer unit 241 receives the second NAS message including the CAG ID of the second base station device from the management device 100, and transfers the second NAS message to the wireless communication device 40.

The transfer unit 241 transfers an instruction to add the second base station device as the secondary node to the own base station device 20 operating as the master node as an instruction to establish radio access between the second base station device and the wireless communication device 40. The transfer unit 241 receives the second NAS message including a request for updating the first information for selecting one or more services provided by a public wireless communication provider from the wireless communication device 40 in which the first information is configured, receives a third NAS message including the third information including the second information for selecting one service from among one or more services provided by an NPN provider in addition to the first information as a response to transferring the second NAS message to the management device 100, and transfers the third NAS message to the wireless communication device 40.

The control processing unit 242 controls radio access to the wireless communication device 40. As a response to transferring the first NAS message to the management device 100, the control processing unit 242 receives a notification of an instruction for establishing radio access between the second base station device belonging to an NPN provider and the wireless communication device 40 from the management device 100.

The wireless communication device 40 transmits the first NAS message including the PDU session establishment request for one service provided by an NPN provider to the management device 100 belonging to a network of a public wireless communication provider via the first base station device. The control processing unit 242 establishes radio access to the wireless communication device 40 based on an instruction from the management device 100.

### <2-5. Configuration of Wireless Communication Device>

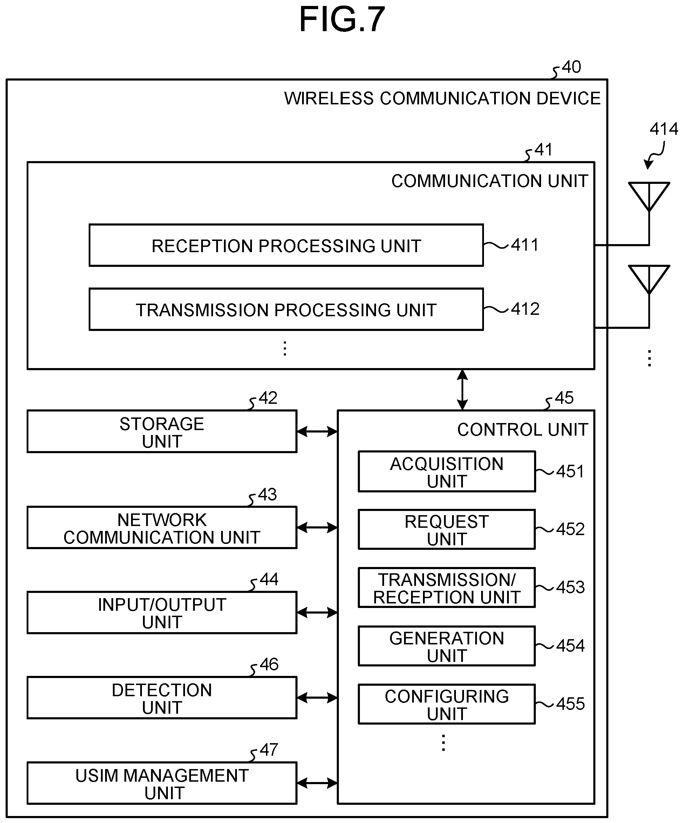

Next, a configuration of the wireless communication device 40 will be described. FIG. 7 is a diagram illustrating an example of a configuration of the wireless communication device 40 according to an embodiment of the present disclosure. The wireless communication device 40 can operate in the FDD mode or TDD mode. In addition, the wireless communication device 40 can simultaneously perform data transmission and data reception by using the same band. For example, the wireless communication device 40 can perform in-band full-duplex communication with other wireless communication devices such as the base station device 20 and the relay device. The wireless communication device 40 may be able to perform the NOMA communication with another wireless communication device.

The wireless communication device 40 includes a communication unit 41, a storage unit 42, a network communication unit 43, an input/output unit 44, a control unit 45, a detection unit 46, and a USIM management unit 47. Note that the configuration illustrated in FIG. 7 is a functional configuration, and a hardware configuration may be different from this. Further, the functions of the wireless communication device 40 may be distributed to and implemented in a plurality of physically separated components. In the configuration of the wireless communication device 40, the network communication unit 43 and the input/output unit 44 do not have to be essential components.

The communication unit 41 is a signal processing unit for wirelessly communicating with another wireless communication device (for example, the base station device 20, a relay device, or another wireless communication device 40). The communication unit 41 can operate in the FDD mode or TDD mode. Furthermore, the communication unit 41 can simultaneously perform data transmission and data reception using the same band. For example, the communication unit 31 can perform in-band full-duplex communication with other communication devices such as the base station device 20 and the wireless communication device 40. The communication unit 41 operates under the control of the control unit 45. The communication unit 41 supports one or more radio access schemes. For example, the communication unit 41 supports both NR and LTE. The communication unit 41 may support W-CDMA or cdma2000 in addition to NR or LTE. Furthermore, the communication unit 41 may support the NOMA communication.

The communication unit 41 includes a reception processing unit 411, a transmission processing unit 412, and an antenna 414. The communication unit 41 may include a plurality of reception processing units 411, a plurality of transmission processing units 412, and a plurality of antennas 414. The configurations of the communication unit 41, the reception processing unit 411, the transmission processing unit 412, and the antenna 414 are similar to those of the communication unit 21, the reception processing unit 211, the transmission processing unit 212, and the antenna 214 of the base station device 20.

The storage unit 42 is a storage device, from which data can be read and in which data can be written, such as a DRAM, an SR_AM, a flash memory, or a hard disk. The storage unit 42 functions as storage means of the wireless communication device 40. The storage unit 42 temporarily or permanently stores various programs and various data for the operation of the wireless communication device 40.

The network communication unit 43 is a communication interface for performing communication with a node located higher on the network. For example, the network communication unit 43 is a LAN interface such as an NIC. Further, the network communication unit 43 may be a wired interface or a wireless interface. The network communication unit 43 functions as network communication means of the wireless communication device 40. The network communication unit 43 performs communication with another device under the control of the control unit 45.

The input/output unit 44 is a user interface for exchanging information with the user. For example, the input/output unit 44 is an operation device for the user to perform various operations, such as a keyboard, a mouse, an operation key, or a touch panel. Alternatively, the input/output unit 44 is a display device such as a liquid crystal display or an organic electroluminescence (EL) display. The input/output unit 44 may be an audio device such as a microphone, a speaker, or a buzzer. The user can perform various operations by voice via the microphone. Further, the input/output unit 44 may be a lighting device such as a light emitting diode (LED) lamp. The input/output unit 44 functions input/output means (input means, output means, operation means, or notification means) of the wireless communication device 40.

The control unit 45 is a controller that controls each unit of the wireless communication device 40. The control unit 45 is implemented by, for example, a processor (hardware processor) such as a CPU or an MPU. For example, the control unit 45 is implemented in a manner in which the processor executes various programs stored in the storage device inside the wireless communication device 40 by using a RAM or the like as a work area. Note that the control unit 45 may be implemented by an integrated circuit such as an ASIC or a FPGA. The CPU, the MPU, the ASIC, and the FPGA can all be regarded as the controller.

As illustrated in FIG. 7, the control unit 45 includes an acquisition unit 451, a request unit 452, a transmission/reception unit 453, a generation unit 454, and a configuring unit 455. These functional blocks may be software blocks or hardware blocks. For example, each of the above-described functional blocks may be one software module implemented by software (including a microprogram) or may be one circuit block on a semiconductor chip (die). It is a matter of course that each functional block may be one processor or one integrated circuit. A method of configuring the functional block is arbitrary.

The acquisition unit 451 acquires information regarding the location of the wireless communication device 40. The acquisition unit 451 acquires information regarding the location of the wireless communication device 40 detected by the detection unit 46 to be described later. The acquisition unit 451 acquires information regarding the location of the wireless communication device 40 measured by a device other than the wireless communication device 40 (such as a device that implements the function of the LMF to be described later) from the other device.

The request unit 452 requests an external device such as the management device 100 to update the first information for selecting a service provided by a public wireless communication service. The request unit 452 transmits a request including information regarding the location detected by the detection unit 46 to an external device such as the management device 100. The request unit 452 requests the management device 100₁₁ to update the first information.

The transmission/reception unit 453 receives, from an external device such as the management device 100, the third information obtained by adding the second information for selecting a service provided by a local wireless communication service to the first information. The transmission/reception unit 453 requests connection to a network of a local wireless communication service by using the third information.

The transmission/reception unit 453 transmits the first NAS message generated by the generation unit 454. The transmission/reception unit 453 transmits the first NAS message to a network of a public wireless communication provider and receives the second NAS message based on a profile related to contract information of the public wireless communication provider. The transmission/reception unit 453 receives the second NAS message including the third information obtained by adding the second information for selecting one or more services provided by a non-public network (NPN) provider that provides a local wireless communication service in an area including the location specified by the information regarding the location to the first information.

The transmission/reception unit 453 specifies one service from among one or more services provided by the NPN provider, transmits the third NAS message for a registration request including information for identifying the specified one service to the network of the public wireless communication provider, and receives a fourth NAS message as a response. The transmission/reception unit 453 receives the fourth NAS message including information indicating that registration for the specified one service among one or more services provided by the NPN provider is accepted. The transmission/reception unit 453 receives information indicating that registration for one service including information regarding a closed access group (CAG) is accepted.

The transmission/reception unit 453 receives an instruction to perform handover to the second base station device belonging to the network of the NPN provider which is a cell corresponding to the CAG. The transmission/reception unit 453 transmits, via the first base station device belonging to the network of the public wireless communication provider, a fifth NAS message for requesting protocol data unit (PDU) session establishment, the fifth NAS message including information for identifying one service for which registration is accepted from among one or more services provided by the NPN provider, and the transmission/reception unit 453 receives, from the first base station device, the instruction to perform handover to the second base station device.

The transmission/reception unit 453 transmits, via the first base station device belonging to the network of the public wireless communication provider, the fifth NAS message for requesting PDU session establishment, the fifth NAS message including information for identifying one service for which registration is accepted from among one or more services provided by the NPN provider. The transmission/reception unit 453 receives, from the first base station device, an instruction to perform processing of establishing dual connectivity in which the first base station device is the master cell group and the second base station device is the secondary cell group.

The transmission/reception unit 453 receives a sixth NAS message as a response to the fifth NAS message. The transmission/reception unit 453 receives the sixth NAS message including information for identifying a PDU session established via the second base station device.

The generation unit 454 generates the first NAS message for requesting update of the first information for selecting a service. The generation unit 454 generates the first NAS message including information regarding the location detected by the detection unit 46.

The configuring unit 455 configures information for selecting a service. The configuring unit 455 configures the third information instead of the first information in response to reception of the second NAS message. The configuring unit 455 is connected to a network of a local wireless communication service by using the third information.

The detection unit 46 detects (senses) the location of the wireless communication device 40. The detection unit 46 senses the location of the wireless communication device 40 by, for example, a technology related to a global navigation satellite system (GNSS). The detection unit 46 may include a GNSS receiver and sense information regarding the location of the wireless communication device 40 by the GNSS receiver. The wireless communication device 40 does not have to include the detection unit 46 in a case where the information regarding the location of the wireless communication device 40 can be acquired by another method.

The USIM management unit 47 manages a profile related to contract information. The USIM management unit 47 stores a profile related to contract information of the public wireless communication provider. The USIM management unit 47 corresponds to the USIM 204.

### <<3. Operation Example of Communication System and the like>>

The configuration of the communication system 1 has been described above. Next, the operation and the like of the communication system 1 will be described.

### <3-1. Example of Registration Procedure>

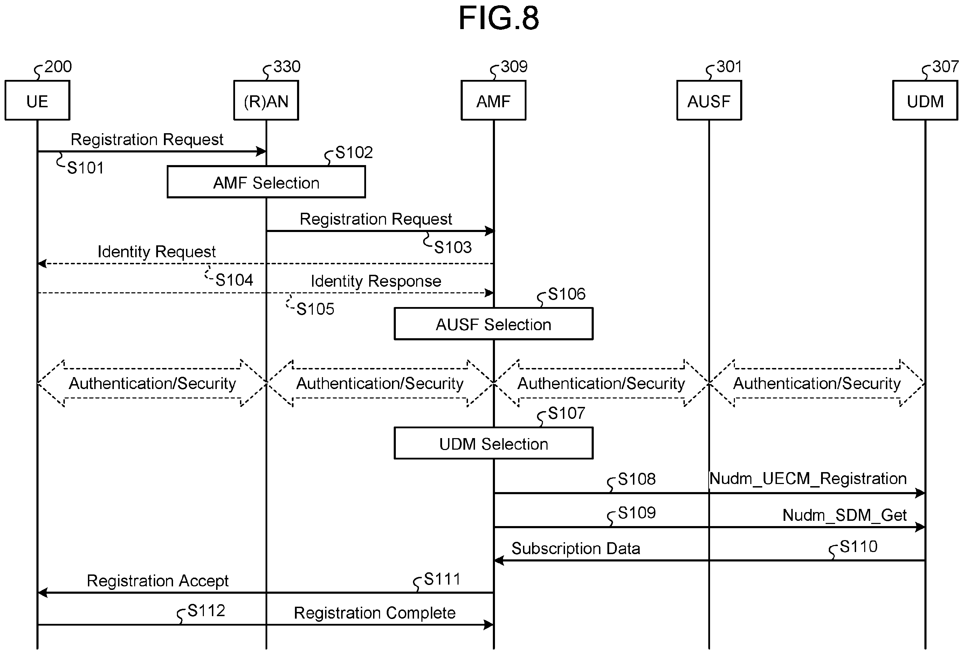

First, an example of the registration procedure in the communication system 1 will be described with reference to FIG. 8. FIG. 8 is a sequence diagram for describing an example of the registration procedure. Note that each processing entity (object) illustrated in the following sequence diagram indicates a device or a function. For example, the UE 200 which is a processing entity in FIG. 8 is the wireless communication device 40 which is a device. In addition, for example, each of the AMF 309, the AUSF 301, and the UDM 307 which are processing entities in FIG. 8 indicates a function provided by the core network 10₁ in FIG. 4. In a case where the processing entity (object) is a function, each function may be implemented by the same device. For example, the AMF 309 and the UDM 307 may be implemented by the same device (management device 100). In this case, an arrow between the AMF 309 and the UDM 307 indicates exchange within one device (management device 100) .

The UE 200 in an RM-DEREGISTERED state, that is, in a non-registered state in the network including the (R)AN 330 and the core network 10₁ transmits a registration request message to the (R)AN 330 in order to perform initial registration (Step S101). Here, the UE 200 transmits the registration request message including a UE identity. It is assumed that the UE 200 has configured network slice selection assistance information (NSSAI) or default configured NSSAI applicable to PLMN_1.

In addition, in a case of having a valid evolved packet system (EPS) globally unique temporary identifier (GUTI), the UE identity is a 5G-GUTI mapped from the EPS GUTI. Here, an evolved packet system (EPS) is long term evolution (LTE) of a 4G system. The EPS GUTI is a temporary ID used to identify a UE in the EPS instead of an ID uniquely assigned to each UE such as an international mobile subscriber identity (IMSI) or an international mobile equipment identity (IMEI) from the viewpoint of security.

Note that the UE identity is not limited to the above. For example, the UE identity may be a PLMN-specific 5G-GUTI assigned by a PLMN in which the UE is attempting to register, that is, PLMN_1, if available. The UE identity may also be a PLMN-specific 5G-GUTI assigned by a PLMM treated as an equivalent PLMN to the PLMN in which the UE is attempting to register, if available. The UE identity may also be a PLMN-specific 5G-GUTI assigned by any PLMN if available.

Otherwise, the UE 200 includes a subscription concealed identifier (SUCI) in the registration request message. Here, the SUCI is an ID obtained by encrypting a subscription permanent identifier (SUPI) which is an ID uniquely assigned to each UE.

The UE 200 needs to include, in the registration request message, mapping between single NSSAI (S-NSSAI) of each requested NSSAI and S-NSSAIs of a home PLMN (HPLMN) so that it can be confirmed whether the S-NSSAI(s) of the requested NSSAI can be accepted based on subscribed S-NSSAIs. Here, the requested NSSAI includes one or more NSSAIs included in the configured NSSAI applicable to PLMN_1. If the configured NSSAI is not available, the requested NSSAI includes one or more NSSAIs included in the default configured NSSAI.

In addition, if the UE 200 uses the default configured NSSAI, the UE 200 includes, in the registration request message, a default configured NSSAI indication.

Here, the S-NSSAI includes a set of a mandatory slice/service type (SST) including 8 bits for identifying a slice type and an optional slice differentiator (SD) including 24 bits for distinguishing different slices in the same SST.

Once the registration request message is received from the UE 200, the (R)AN 330 performs AMF selection (Step S102). Here, in a case where a 5G S-temporary mobile subscription identifier (5G-S-TMSI) or a globally unique AMF identifier (GUAMI) is not included, or the 5G-S-TMSI or GUAMI does not indicate a valid AMF 309, the (R)AN 330 selects the AMF 309 based on a radio access technology ((R)AT) and, if available, the requested NSSAI.

In a case where the (R)AN 330 is the NG-RAN, the (R)AN 330 transfers a registration request including a selected PLMN ID, that is, PLMN_1, to the AMF 309 (Step S103). In a case where the UE 200 has not provided the SUCI to the AMF 309, the AMF 309 starts identity request processing and transmits an identity request message to the UE 200 (Step S104), thereby requesting for the SUCI.

Once the identity request message is received, the UE 200 transmits, as a response, an identity response message including the SUCI (Step S105). Here, the UE 200 can acquire the SUCI by using a public key of the HPLMN.

The AMF 309 performs AUSF selection based on the SUPI or the SUCI (Step S106) and starts authentication of the UE 200. Once a request for authentication is received from the AMF 309, the AUSF 301 performs authentication of the UE 200. The AUSF 301 selects the UDM 307 and acquires authentication data from the UDM 307 as authentication processing. Once the UE 200 is authenticated, the AUSF 301 provides security information to the AMF 309. Upon successful authentication in the AMF 309, the AMF 309 starts NG application protocol (NGAP) processing to provide a security context to the (R)AN 330. The (R)AN 330 holds the security context and returns a response to the AMF 309. Thereafter, the (R)AN 330 uses this security context to protect messages exchanged with the UE 200.

The AMF 309 performs UDM selection based on the SUPI (Step S107), and selects the UDM 307. The AMF 309 is registered in the UDM 307 using Nudm_UECM_Registration (Step S108).

In a case where the AMF 309 does not have subscription data of the UE 200, subscription data such as access and mobility subscription data or SMF selection subscription data is acquired by using Nudm_SDM_Get (Step S109) (Step S110). The AMF 309 generates a UE context after acquiring the access and mobility subscription data from the UDM 307. The access and mobility subscription data includes information as to whether or not the NSSAI may be included in RRC connection establishment under 3GPP access in a plain text format.

The AMF 309 transmits a registration accept message to the UE 200 (Step S111). The registration accept message includes the 5G-GUTI and a registration area. An N2 message including the registration accept message includes allowed NSSAI. The allowed NSSAI includes only S-NSSAIs that do not request network slice-specific authentication and authorization based on the subscription data, or S-NSSAIs that have succeeded in network slice-specific authentication and authorization based on the UE context of the AMF 309.

In addition, the AMF 309 may provide a list of equivalent PLMNs to the UE 200 registered in the PLMN. Note that the AMF 309 does not provide the list of equivalent PLMNs to the UE 200 registered in a stand-alone NPN (SNPN).

The UE 200 transmits a registration complete message to the AMF 309 to notify that a new 5G-GUTI is assigned (Step S112). According to the above processing, the wireless communication device 40 that is the UE 200 becomes to be in the registration state, that is, the RM-REGISTERED state with respect to the network including the (R)AN 330 and the core network 10₁, that is, the network of the first provider.

### <3-2. Example of Use of NPN Service>

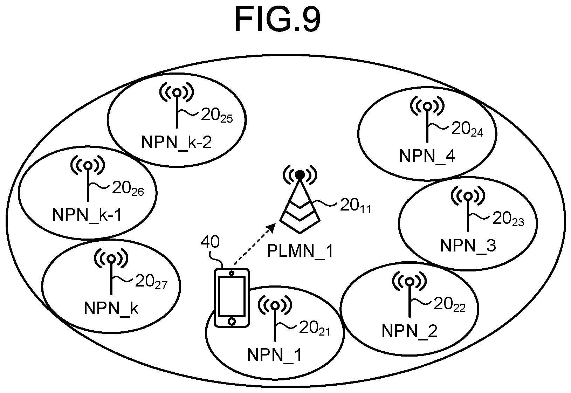

Here, the use of the NPN service via the PLMN service will be described with reference to FIG. 9. FIG. 9 is a diagram illustrating an example of the use of the NPN service via the PLMN service. FIG. 9 illustrates a case where the wireless communication device 40 is located within a range of the local wireless communication service provided using the base station device 20₂₁ by NPN_1 which is an NPN operator.

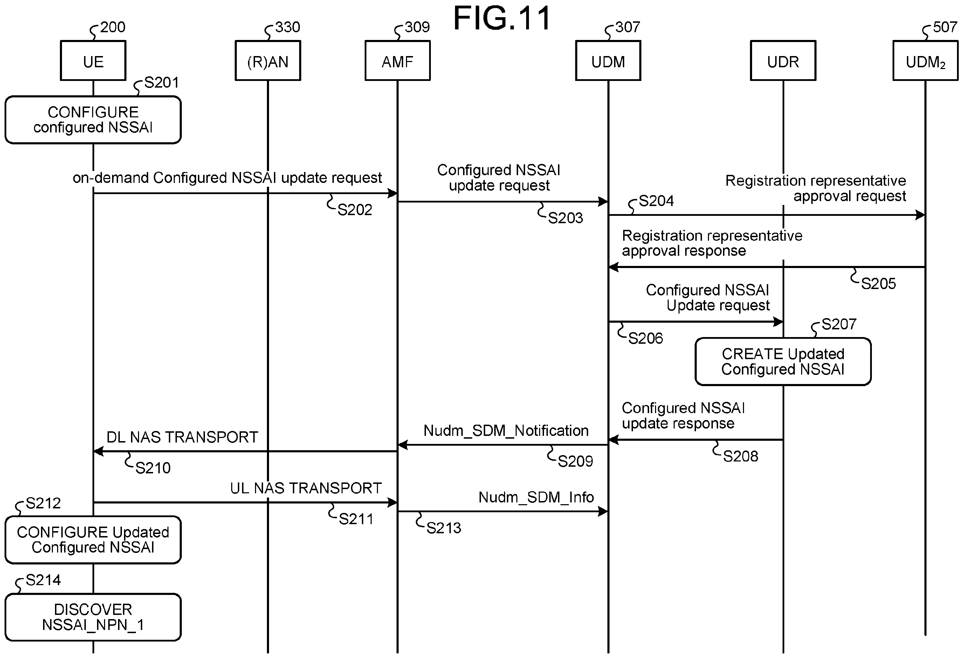

The wireless communication device 40 has been registered in PLMN_1, which is the network of the first provider, according to the registration procedure illustrated in FIG. 8. The wireless communication device 40 is present within an area of the local communication service provided by NPN_1 in addition to the communication service provided by the first provider. The PLMN list acquired by the ME 201 from the USIM 204 in which the profile based on the subscription with the first provider is stored includes PLMN_1 but does not include NPN_1. That is, the wireless communication device 40 cannot discover the local communication service provided by NPN_1. Therefore, the wireless communication device 40 starts on-demand configured NSSAI update processing according to an instruction from a higher layer, for example, an application. The on-demand configured NSSAI update processing will be described with reference to FIG. 11, but before that, the configuration of the network architecture will be described.

### <3-3. Configuration Example 2 of Network Architecture>

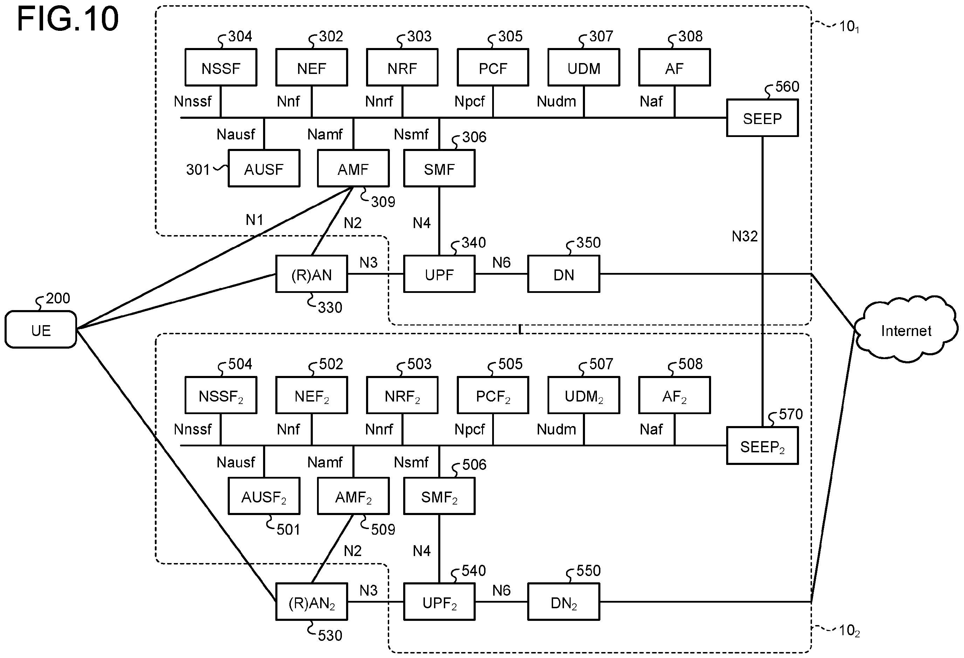

A configuration of the network architecture of the 5GS will be described with reference to FIG. 10. FIG. 10 is a diagram illustrating another example of the configuration of the network architecture. Note that a description of the similar points to those in FIG. 4 will be omitted as appropriate.

The network architecture illustrated in FIG. 10 includes the UE 200, the (R)AN 330, the core network 10₁, an (R)AN₂ 530, and a core network 10₂. Here, a network including the (R)AN 330 and the core network 10₁ is, for example, the network of the first provider (first network), and a network including the (R)AN₂ 530 and the core network 10₂ is a network of an NPN operator (second network). In the core network 10₂ of the second network, the similar points to those of the core network 10₁ of the first network are denoted by reference signs (5**) in which "3" of the third digit in the reference signs is replaced with "5", and an overlapping description will be omitted. Further, in the core network 10₂ of the second network, a component similar to that of the core network 10₁ of the first network is distinguished by adding a subscript "2" after its name, but the configuration of the core network 10₂ of the second network is similar to that of the core network 10₁ of the first network.

In FIG. 10, the control planes of both the core networks 10₁ and 10₂ are connected at a reference point called N32 via a security edge protection proxy (SEPP) 560 and a SEPP₂ 570. The second network including the (R)AN₂ 530 and the core network 10₂ can operate in a mode called a stand-alone mode, or can operate cooperatively in a mode called a non-standalone mode with a roaming agreement or SLA with the first network including the (R)AN 330 and the core network 10₁. In the operation in the non-standalone mode, the NF of the core network 10₁ and the NF of the core network 10₂ may exchange information by a service-based interface via the SEPP 560 and the SEPP₂ 570.

Similarly to the first network, the second network may prepare all the network functions of the core network by itself, or may cause the core network 10₁ to provide some functions of the core network such as functions of an AMF (corresponding to an AMF₂ 509 in FIG. 10) and a UDM (corresponding to a UDM₂ 507 in FIG. 10).

The UE 200 is connected to the (R)AN 330 of the first network and the (R)AN₂ 530 of the second network by, for example, dual connectivity (DC). Here, the network function of the core network 10₁ may provide the control plane and the network function of the core network 10₂ may provide the user plane by C/U separation. For example, the UE 200 includes an N1 interface that is between the UE 200 and the AMF 309 of the core network 10₁ to exchange a control-system NAS message.

### <3-4. Example of Update Processing>

From here, the on-demand configured NSSAI update processing will be described with reference to FIG. 11. FIG. 11 is a sequence diagram for describing an example of the update processing. A description of similar points to those described above in FIG. 8 and the like will be omitted.

The UE 200 (wireless communication device 40) configures the configured NSSAI or the default configured NSSAI applicable to PLMN_1 (Step S201).

The UE 200 transmits an on-demand configured NSSAI update request of the NAS message to the AMF 309 via the (R)AN 300 (the base station device 20₁₁) (Step S202). Here, the UE 200 includes information regarding the location in the on-demand configured NSSAI update request.

Once the on-demand configured NSSAI update request is received from the UE 200, the AMF 309 transmits the configured NSSAI update request to the UDM 307 (Step S203) .

The UDM 307 specifies NPN_1 that can provide a service for the UE 200 from among candidates of the NPN operator based on information regarding the location of the UE 200, and transmits a registration representative approval request for confirming allowance for the UDM₂ 507 belonging to NPN_1 to serve as a registration proxy (Step S204) .

In a case of allowing the UDM 307 to serve as a proxy for registration of the UE 200 for the service of NPN_1, the UDM₂ 507 returns a registration representative approval response (Step S205). Here, the registration representative approval response may include S-NSSAI(s) corresponding to a specific service for which serving as a registration proxy is allowed among a plurality of services provided by NPN_1.

Once the UDM 307 transmits a configured NSSAI update request including S-NSSAIs corresponding to a service for which serving as a proxy for registration of the UE 200 is allowed (Step S206), the UDR creates updated configured NSSAI based on the received S-NSSAI(s) belonging to NPN_1 (Step S207). The updated configured NSSAI includes S-NSSAI(s) corresponding to one or more network slices for which NPN_1 has allowed PLMN_1 to serve as a registration proxy, in addition to S-NSSAI(s) corresponding to one or more network slices provided by PLMN_1.

The UDR returns a configured NSSAI update response including the generated updated configured NSSAI to the UDM 307 (Step S208) .

Once it is confirmed that there is a change in configured NSSAI based on the received updated configured NSSAI, the UDM 307 instructs the AMF 309 to start UE configuration update processing for updating the configured NSSAI or UE parameters update processing. The UDM 307 transmits a Nudm_SDM_Notification message including the updated configured NSSAI to the AMF 309 (Step S209).

Here, the Nudm_SDM_Notification message may include information indicating whether the network slice provided by NPN_1 is provided in the form of a stand-alone non-public network (SNPN) or a public network integrated NPN (PNI-NPN) by NPN_1. In a case where the network slice provided by NPN_1 is provided in the form of the PNI-NPN, CAG information is configured in the UE 200 allowed to be registered, as described later.

Once the Nudm_SDM_Notification message including the updated configured NSSAI is received, the AMF 309 transmits the updated configured NSSAI to the UE 200 by using a DL NAS TRANSPORT message (Step S210).

Once the updated configured NSSAI is received, the UE 200 returns the UL NAS TRANSPORT message to the AMF 309 as a response (Step S211). Then, the UE 200 configures the newly acquired updated configured NSSAI as the configured NSSAI (Step S212).

The AMF 309 returns a Nudm_SDM_Info message as a response to the UDM 307 (Step S213). The UE 200 discovers a network slice provided by NPN_1, for example, NSSAI_NPN_1, by using the updated configured NSSAI (Step S214) .

The UDM 307 may instruct the AMF 309 to configure the CAG information for the UE 200 by using the UE configuration update processing or the UE parameters update processing in accordance with the update of the configured NSSAI. Here, a CAG is identified by using a CAG ID, and a CAG cell broadcasts one or more CAG IDs for each PLMN. The CAG information is an allowed CAG list including CAG IDs of CAG cells to which the UE 200 is allowed to access.

With the above processing, the wireless communication device 40 can initiatively detect only NPN_1 that provides a service only in an area where the wireless communication device 40 is present on an on-demand basis among many NPN operators (NPN_1 to NPN_k) or a service provided by NPN_1.

In addition, the UE 200 in which the updated configured NSSAI is configured performs the registration procedure of FIG. 8 based on the updated configured NSSAI and performs re-registration.

The information regarding the location included in the on-demand configured NSSAI update request in Step S202 is, for example, information regarding the location detected using the GNSS receiver equipped in the UE 200.

Here, the UE 200 may detect the information regarding the location in cooperation with a network-assisted GNSS, that is, the NG-RAN. In a UE-based mode, the UE 200 acquires assistance data from the location management function (LMF), and performs measurement related to the GNSS and location calculation. For example, it is a widely known technology called assisted-GNSS.

For example, in a case where a signal from the GNSS cannot be received, the UE 200 may detect the information regarding the location by means other than the GNSS. For example, the UE 200 detects information regarding its location using a technology called WLAN positioning, Bluetooth positioning, or terrestrial beacon systems (TBS) positioning.

In the WLAN positioning, the UE 200 measures a received signal strength (RSSI) for each WLAN access point and calculates the location based on information regarding known coordinates of each WLAN access point and the measured value. Further, the UE 200 may measure a round trip time (RTT) with respect to the WLAN access point to calculate the location thereof.

In the Bluetooth positioning, the UE 200 measures a received signal strength (RSSI) for each Bluetooth beacon and calculates the location based on information regarding known coordinates of each Bluetooth beacon and the measured value.

In addition, a method of providing the information regarding the location of the UE 200 to be provided to the AMF 309 is not limited to the method of including the information in the on-demand configured NSSAI update request as in Step S202. For example, in a case where the on-demand configured NSSAI update request that does not include the information regarding the location is received, the AMF 309 may request the UE 200 to provide the information regarding the location. Furthermore, the AMF 309 may acquire the information regarding the location of the UE 200 via the LMF.

In a case where the UE 200 is equipped with the GNSS receiver, in a UE-assisted mode, the UE 200 performs measurement related to the GNSS, such as code phase measurement, Doppler measurement, and carrier phase measurement, and transmits the measured values to the LMF, and the LMF calculates the location of the UE 200. For the UE 200 that is equipped with the GNSS receiver but cannot receive a signal from the GNSS, or for the UE 200 that is not equipped with the GNSS, the LMF may acquire the information regarding the location of the UE 200 by a positioning technique called observed time difference of arrival (OTDOA), multi-round trip time (RTT), downlink angle-of-departure (DL AoD), downlink time difference of arrival (DL TDOA), uplink time difference of arrival (UL TDOA), or angle of arrival (UL AoA), or a positioning technique using a cell ID (CID).

For example, in the OTDOA, the UE 200 receives downlink positioning reference signals (PRSs) from a plurality of transmission points (TPs) and reports measured values related to a physical cell ID, a global cell ID, a TP ID, and timings of the PRSs to the LMF via an LTE positioning protocol (LPP), so that the LMF calculates the location of the UE 200 based on measured information regarding known coordinates of each TP and relative timings of the reported PRSs.

For example, in the positioning using the CID, the LMF calculates the location of the UE 200 based on information regarding known coordinates of the ng-eNB or the gNB and the following measurement results reported from the UE 200. The UE 200 reports, for example, an evolved cell global identifier (ECGI) or a physical cell ID, and measurement results regarding reference signal received power (RSRP), reference signal received quality (RSRQ), and a UE Rx-Tx time difference to the LMF. Here, the UE Rx-Tx time difference is defined as a time difference between a timing at which the UE 200 receives and a timing at which the UE transmits.

The AMF 309 includes the information regarding the location of the UE 200 acquired from the LMF in the configured NSSAI update request as in Step S203, and transmits the configured NSSAI update request to the UDM 307. In a case where the UDM 307 receives the configured NSSAI update request that does not include the information regarding the location, the UDM 307 may instruct the LMF to acquire the information regarding the location of the UE 200. That is, the LMF can acquire the information regarding the location of the UE 200 based on the above-described technique, and the UDM 307 can acquire the information regarding the location of the UE 200 via the LMF.

Furthermore, if a higher layer, for example, an NPN operator that provides a specific service that the application desires to use is known to the UE 200, identification information of the NPN operator that the UE 200 desires to add, for example, a SNPN ID to be described later, may be included in advance in the on-demand configured NSSAI update request as in Step S202. The on-demand configured NSSAI update request may be activated by the application. Here, in addition to or instead of the SNPN ID, a human-readable network name (HRNN) may be used.

Although the above example illustrates an example in which the UDM₂ 507 belongs to the NPN operator providing NPN_1, the UDM₂ 507 is not limited to belonging to the NPN operator. For example, in a case where the second provider, that is, PLMN_2, provides NPN_1 in the form of the PNI-NPN, the UDM₂ 507 is a device belonging to the second provider. Based on a dynamic SLA between the first provider and the second provider, messages for acknowledgement (registration representative approval request in Step S204) and response (registration representative approval response in Step S204) for allowing PLMN_1 to serve as a proxy for registration of one or more network slices provided by PLMN_2 are exchanged between the UDM 307 and the UDM₂ 507. Further, as in an example described later, PLMN_1 may provide a service via NPN_1 in the form of the PNI-NPN, and an allowed CAG list including the CAG ID of the base station device 20₂₁ belonging to NPN_1 may be configured in the UE 200 in accordance with acquisition of the allowed NSSAI.

### <3-5. Example 1 of Start of Service>

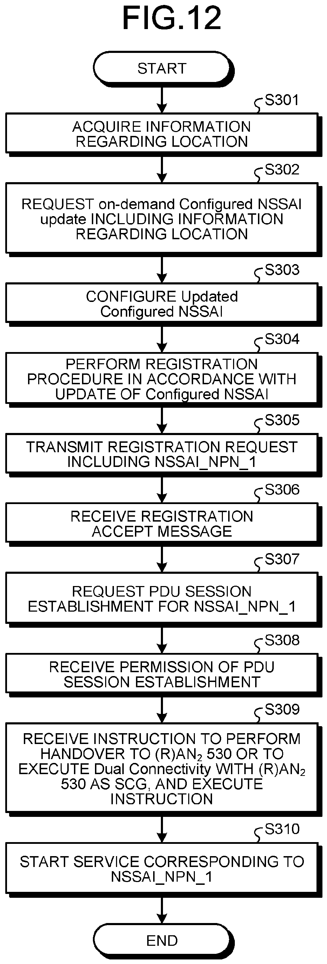

Next, processing performed by the UE 200 that is the wireless communication device 40 until the service provided by NPN_1 is started will be described with reference to FIG. 12. FIG. 12 is a flowchart for describing an example of the processing until a service provided by a local wireless communication service is started.

First, the UE 200 acquires information regarding the location (Step S301). Then, the UE 200 requests the on-demand configured NSSAI update including the information regarding the location (Step S302). As a result, the UE 200 acquires the updated configured NSSAI as a response to the on-demand configured NSSAI update request.

Then, the UE 200 configures the updated configured NSSAI as the configured NSSAI (Step S303). As described above, the updated configured NSSAI includes S-NSSAI(s) corresponding to one or more network slices provided by NPN_1 in addition to S-NSSAI(s) corresponding to one or more network slices provided by PLMN_1.

Then, the UE 200 performs the registration procedure illustrated in FIG. 8 in accordance with the update of the configured NSSAI (Step S304). The UE 200 transmits the registration request via the communication service provided by the first provider, that is, PLMN_1 (Step S305). The registration request includes the requested NSSAI including S-NSSAI(s) included in the configured NSSAI. That is, the requested NSSAI includes S-NSSAI(s) corresponding to one or more network slices provided by NPN_1.

Then, the UE 200 receives the registration accept message (Step S306). As a result, the UE 200 is allowed to use a service corresponding to NSSAI_NPN_1 provided by NPN_1. A message for making a notification of allowance of registration in NPN_1 includes NSSAI_NPN_1 as the allowed NSSAI. The allowance of registration for NSSAI_NPN_1 may include information regarding an expiration date, and in a case where the information regarding the expiration date is included, the UE 200 is allowed to use the service corresponding to NSSAI_NPN_1 provided by NPN_1 only during a period until the expiration date.

In addition, in a case where the base station device 20₂₁ belonging to NPN_1 operates in the form of the public network integrated NPN (PNI-NPN), the UE 200 acquires the allowed CAG list including the CAG ID of the base station device 20₂₁ belonging to NPN_1 in accordance with the acquisition of the allowed NSSAI. Then, the UE 200 configures the acquired allowed CAG list. The CAG ID may be, for example, a CAG ID assigned to PLMN_1. That is, the base station device 20₂₁ belonging to NPN_1 and operating as the CAG cell having this CAG ID is a CAG cell to which the UE 200 in which the allowed CAG list including this CAG ID is configured with PLMN_1 as the HPLMN is allowed to access.

Then, the UE 200 requests PDU session establishment in order to use the service corresponding to NSSAI_NPN_1 provided by NPN_1 (Step S307). As a result, the UE 200 receives permission of the PDU session establishment (Step S308). Then, the UE 200 receives an instruction to perform handover to the (R)AN₂ 530, that is, the base station device 20₂₁ belonging to NPN_1, or to execute dual connectivity (DC) in which the (R)AN₂ 530 is the secondary cell group (SCG), and executes the instruction (Step S309). Then, the UE 200 starts using the service corresponding to NSSAI_NPN_1 (Step S310).

Although FIG. 12 illustrates an example in which handover to the (R)AN₂ 530 that provides NSSAI_NPN_1 is performed or the (R)AN₂ 530 is connected by DC in the PDU session establishment processing, processing for causing the (R)AN₂ 530 to camp on may be performed in the registration procedure performed before the PDU session establishment processing. For example, the (R)AN 330 causes the UE 200 to update a parameter for cell reselection by using system information or dedicated signaling during the registration procedure.

The parameter for cell reselection is, for example, a frequency list including one or more frequency candidates including an operating frequency of the (R)AN₂ 530. That is, the frequency list for cell reselection can be determined based on the provided S-NSSAI. Here, the frequency list is, for example, frequencyBandList included in FrequencyInfoDL of radio resource control information elements, MultiFrequencyBandListNR, MultiFrequencyBandListNR-SIB, or the like.

Furthermore, the parameter for cell reselection is, for example, information regarding a frequency priority, and in the information regarding the frequency priority, the highest priority is given to the operating frequency of the (R)AN₂ 530. That is, the information regarding the frequency priority for cell reselection can be determined based on the provided S-NSSAI. Here, the information regarding the frequency priority is, for example, CellReselectionPriority and CellReselectionSubPriority of radio resource control information elements.

The parameter for cell reselection may include information regarding a frequency supporting the S-NSSAI. The UE 200 may select a frequency candidate for cell reselection based on the S-NSSAI.

In the registration procedure, the UE 200 performs cell reselection processing based on the system information or the frequency list for cell reselection acquired via the dedicated signaling, and the information regarding the frequency priority, and recognizes the (R)AN₂ 530, that is, the base station device 20₂₁ belonging to NPN_1 as a serving cell. Then, the UE 200 can transmit the PDU session establishment request (corresponding to Step S307) for using the service corresponding to NSSAI_NPN_1 provided by NPN_1 via the (R)AN₂ 530.

### <3-6. Example 1 of Session Establishment>

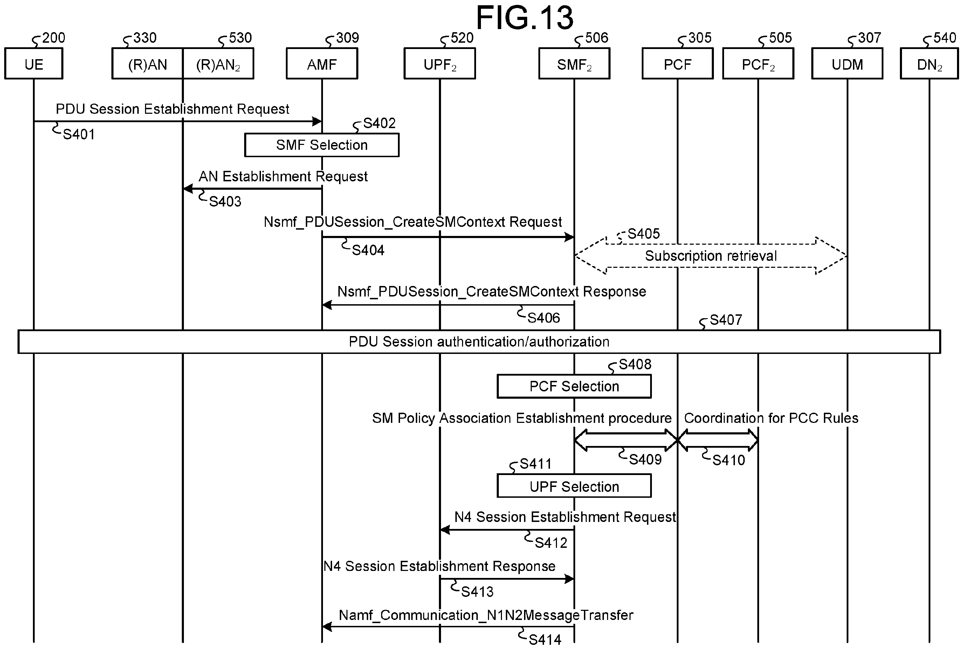

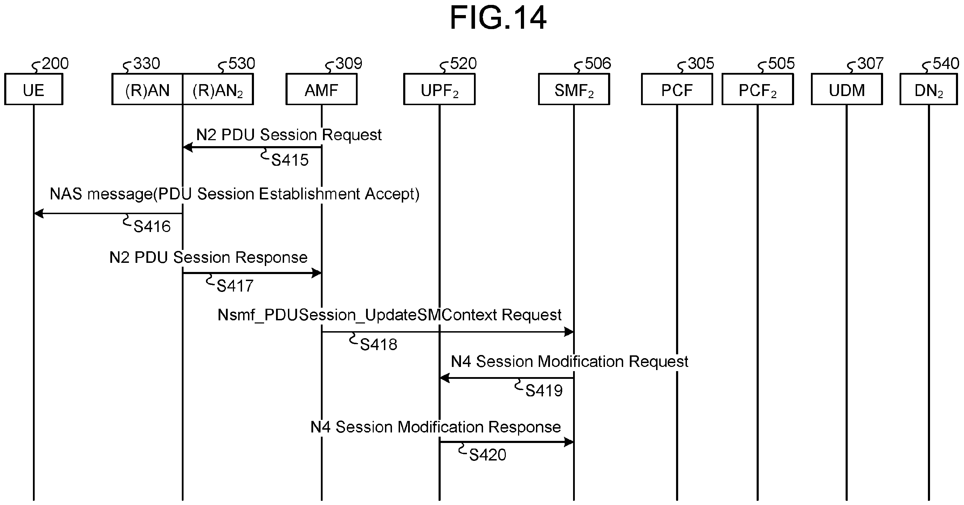

Next, the PDU session establishment processing will be described with reference to FIGS. 13 and 14. FIGS. 13 and 14 are diagrams illustrating an example of the PDU session establishment processing. A description of similar points to those described above in FIGS. 8, 11, and the like will be omitted.

The UE 200 registered for NSSAI_NPN_1 transmits a PDU session establishment request message to the AMF 309 via the (R)AN 330 (Step S401). Here, the PDU session establishment request message includes NSSAI_NPN_1, which is S-NSSAI corresponding to the requested service, in the allowed NSSAI.

Once the PDU session establishment request message is received, the AMF 309 performs SMF selection (Step S402). The AMF 309 selects, for example, an SMF₂ 506 belonging to NPN_1. The AMF 309 transmits an AN establishment request to the (R)AN 330 and the (R)AN₂ 530 (Step S403). Here, the AN establishment request includes an instruction to perform handover to the (R)AN₂ 530, that is, the base station device 20₂₁ belonging to NPN_1, or to execute the DC with the (R)AN₂ 530 as the SCG.

The AMF 309 transmits a Nsmf_PDUSession_CreateSMContext request including S-NSSAI of the allowed NSSAI to the selected SMF₂ 506 (Step S404) . Here, the Nsmf_PDUSession_CreateSMContext request includes the SUPI and the S-NSSAI. In a case where session management subscription data corresponding to the SUPI and the S-NSSAI is not available, the SMF₂ 506 acquires the session management subscription data from the UDM 307 by using Nudm_SDM_Get (Step S405) .

Then, for example, the SMF₂ 506 performs registration by using Nudm_SDM_Subscribe in order to receive a notification when the session management subscription data is updated. For example, in a case where a subscription contract for using a service corresponding to NSSAI_NPN_1 has an expiration date, when the expiration date is reached, the session management subscription data is updated and a notification thereof is made from the UDM 307 to the SMF₂ 506.

In a case where the PDU session establishment request can be processed, the SMF₂ 506 that has received the Nsmf_PDUSession_CreateSMContext request generates an SM context, returns, to the AMF 309, a Nsmf_PDUSession_CreateSMContext response, and provides an SM Context ID (Step S406). In a case where second authentication/authorization processing by a DN-AAA server needs to be performed during PDU session establishment, the SMF₂ 506 starts PDU session establishment authentication/authorization processing (Step S407) .

In a case where dynamic policy and charging control (PCC) is applied to a PDU session to be established, the SMF₂ 506 performs PCF selection (Step S408). The SMF₂ 506 may apply a local policy.

In addition, the SMF₂ 506 may perform an SM policy association establishment procedure to establish SM policy association with the PCF 305 and acquire default PCC rules for the PDU session (Step S409). Thereby, the PCC rules can be acquired before selecting a UPF₂ 520. Here, the PCF 305 may create the PCC rules in coordination with a PCF₂ 505 (Step S410) .

The SMF₂ 506 performs charging processing based on the acquired PCC rules. Here, as a charging method using the PCC rules, volume based charging, time based charging, volume and time based charging, event based charging, and no charging are supported, and any charging method is set in the SM policy association establishment procedure.

The SMF₂ 506 performs UPF selection to select one or more UPF₂s 520 (Step S411). The SMF₂ 506 transmits an N4 session establishment request message to the selected UPF₂ 520 (Step S412). The UPF₂ 520 returns an N4 session establishment response message to respond to the SMF₂ 506 (Step S413). In a case where a plurality of UPF₂s 520 are selected for the PDU session, the N4 session establishment processing is started for each UPF₂ 520.

The SMF₂ 506 transmits a Namf_Communication_N1N2 MessageTransfer message to the AMF 309 (Step S414). Here, the Namf_Communication_N1N2 MessageTransfer message includes a PDU session ID, N2 SM information, CN Tunnel Info, S-NSSAI of the allowed NSSAI, and an N1 SM container. Here, the N2 SM information includes a PDU session ID, QFI(s), QoS profile(s), and the like. In addition, in a case where a plurality of UPF₂s 520 are used for the PDU session, CN Tunnel Info includes tunnel information related to the plurality of UPF₂s 520 that terminate N3.

In addition, the N1 SM container includes PDU Session Establishment Accept supplied from the AMF 309 to the UE 200. In addition, PDU Session Establishment Accept includes the S-NSSAI of the allowed NSSAI. The Namf_Communication_N1N2 MessageTransfer message includes a PDU session ID so that the AMF 309 knows which access to use for the UE 200.

The AMF 309 transmits an N2 PDU session request message to the (R)AN₂ 530 (Step S415). Here, the AMF 309 transmits, to the (R)AN 330 or the (R)AN₂ 530, an NAS message including a PDU session ID and PDU Session Establishment Accept to be transmitted to the UE 200 and the N2 SM information received from the SMF₂ 506 via the N2 PDU session request message. Here, the (R)AN₂ 530 is the base station device 20₂₁ belonging to NPN_1.

The (R)AN 330 or the (R)AN₂ 530 transfers the NAS message including the PDU session ID and the N1 SM container to the UE 200 (Step S416). Here, the N1 SM container includes PDU Session Establishment Accept.

The (R)AN 330 or the (R)AN₂ 530 returns, to the AMF 309, an N2 PDU session response message (Step S417). The AMF 309 transfers the N2 SM information received from the (R)AN 330 or the (R)AN₂ 530 to the SMF₂ 506 via a Nsmf_PDUSession_UpdateSMContext Request message including the SM Context ID and the N2 SM information (Step S418).

The SMF₂ 506 starts an N4 session modification procedure with the UPF₂ 520, and transmits an N4 session modification request message to the UPF₂ 520 (Step S419). The SMF₂ 506 provides AN tunnel information (AN Tunnel Info) to the UPF₂ 520 in addition to a transfer rule. The UPF₂ 520 returns, to the SMF₂ 506, an N4 session modification response message (Step S420). In a case where a plurality of UPF₂s 520 are used in the PDU session, the above-described N4 session modification procedure is performed on all the UPF₂s 520 that terminate N3. The PDU session is established according to the above processing.

### <3-7. Example of Access Network Establishment>

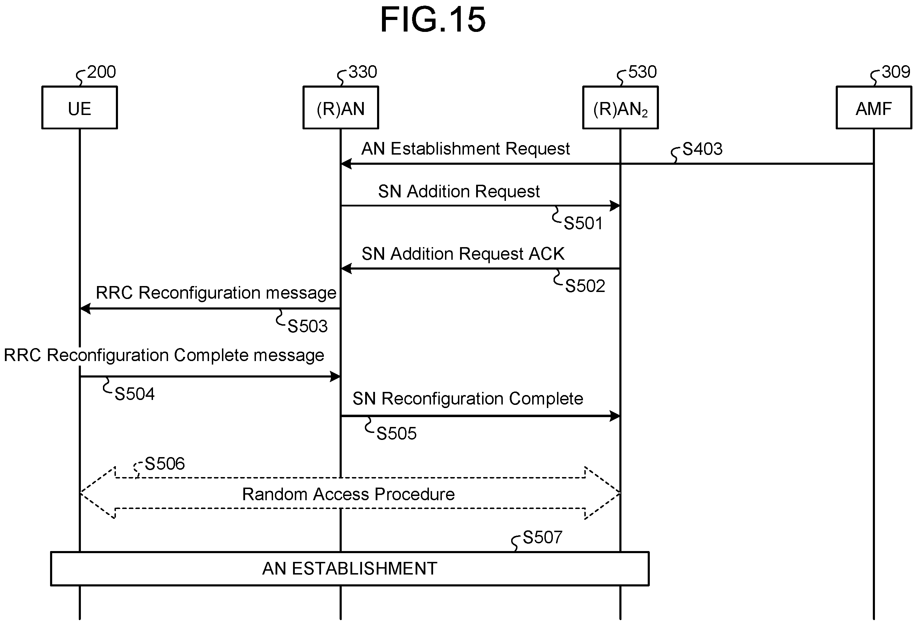

Next, access network (AN) establishment will be described with reference to FIG. 15. FIG. 15 is a diagram illustrating an example of AN establishment processing. A description of similar points to those described above in FIGS. 8, 11, 13, 14, and the like will be omitted.

The AMF 309 transmits an AN establishment request to the (R)AN 330 belonging to PLMN_1 (Step S403). The AN establishment request includes information regarding means of an access network (AN) established with the (R)AN₂ 530 belonging to NPN_1. Here, the information regarding the means of the AN is, for example, performing handover from the (R)AN 330 to the (R)AN₂ 530. Furthermore, the information regarding the means of the AN may be, for example, executing dual connectivity (DC) with the (R)AN 330 as the master node (MN) and the (R)AN₂ 530 as the secondary node (SN). Hereinafter, processing in a case where the information regarding the means of the AN is execution of the DC will be described.

The (R)AN 330 that is the MN transmits an SN addition request to the (R)AN₂ 530 that is the SN (Step S501). In a case where the request is accepted, the (R)AN₂ 530 transmits, as a response, SN Addition Request Acknowledge including an SN RRC configuration message (Step S502) .

The (R)AN 330 transmits an MN RRC reconfiguration message including the SN RRC configuration message to the UE 200 (Step S503). The SN RRC configuration message includes, for example, information such as the operating frequency of the base station device 20₂₁ belonging to NPN_1 and information necessary for random access processing to the base station device 20₂₁ belonging to NPN_1.

The UE 200 transmits, as a response, an MN RRC reconfiguration complete message including an SN RRC response message to the (R)AN 330 by applying new RRC configuration (Step S504).

The (R)AN 330 transmits the SN RRC response message to the (R)AN₂ 530 in order to notify that the UE 200 has succeeded in the RRC configuration processing (Step S505) .

Then, the UE 200 starts random access processing for the (R)AN₂ 530 in order to synchronize with the (R)AN₂ 530 operating as the SN (Step S506). When the random access to the (R)AN₂ 530 is successful, the AN is established (Step S507). With the above processing, a radio bearer is formed between the UE 200 and the (R)AN₂ 530, and data can be transmitted and received using radio resources of the (R)AN₂ 530.

### <3-8. Example 1 of Termination of Service>

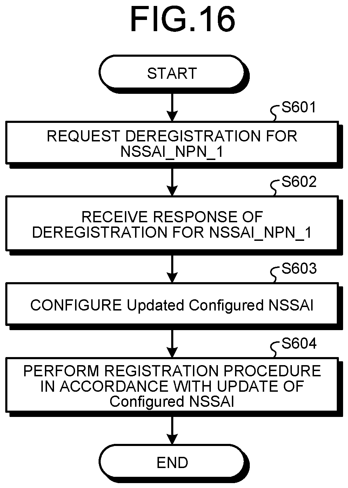

Next, the processing performed by the UE 200 that is the wireless communication device 40 when the service provided by NPN_1 is terminated will be described with reference to FIG. 16. FIG. 16 is a flowchart for describing an example of the processing until a service provided by the local wireless communication service is terminated. A description of similar points to those described above in FIG. 12 and the like will be omitted.

First, the UE 200 requests deregistration for NSSAI_NPN_1 (Step S601). Then, the UE 200 receives a response of the deregistration for NSSAI_NPN_1 (Step S602). The response of the deregistration includes the configured NSSAI that does not include S-NSSAI(s) corresponding to the service provided by NPN_1 is included as the updated configured NSSAI. That is, the configured NSSAI includes only S-NSSAI(s) corresponding to the service provided by PLMN_1. In a case where the parameter for cell reselection of the UE 200, for example, the information regarding the frequency priority, is updated at the time of registration for NSSAI_NPN_1, the update is performed with the information regarding the frequency priority determined based on S-NSSAI(s) corresponding to the service provided by PLMN_1. This update is performed, for example, at the time of RRC connection release. The information regarding the frequency priority determined based on S-NSSAI(s) corresponding to the service provided by PLMN_1 is reflected in cellReselectionPriorities, and the UE 200 acquires cellReselectionPriorities via the system information or an RRCRelease message and updates the information regarding the frequency priority for cell reselection.

The UE 200 configures the received updated configured NSSAI (Step S603). Then, the UE 200 performs the registration procedure illustrated in FIG. 8 in accordance with the update of the configured NSSAI (Step S604) .

### <4. Another Operation Example>

In the example described above, an example in which the UE 200 having PLMN_1 as the HPLMN discovers and uses a local service provided by NPN_1 on an on-demand basis has been described. In the following example, a case of temporarily using a local service with NPN_1 as a visitor PLMN (VPLMN) or the HPLMN on an on-demand basis will be described as an example.

### <4-1. Example 2 of Start of Service>

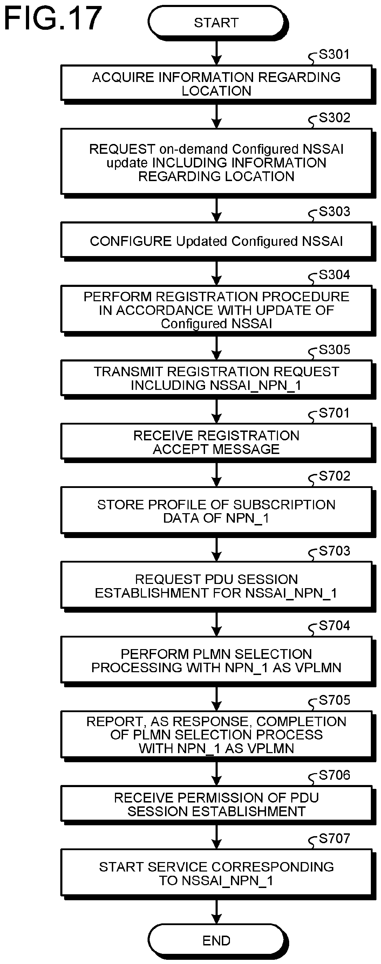

First, another example of the processing performed by the UE 200 that is the wireless communication device 40 until the service provided by NPN_1 is started will be described with reference to FIG. 17. FIG. 17 is a flowchart for describing another example of the processing until a service provided by the local wireless communication service is started. A description of similar points to those described above in FIGS. 12, 16, and the like will be omitted. Since the processing from Steps S301 to S305 in FIG. 17 is the same as that from Steps S301 to S305 in FIG. 12, a description thereof will be omitted.

After Steps S301 to S305, the UE 200 receives the registration accept message (Step S701). As a result, the UE 200 is allowed to use a service corresponding to NSSAI_NPN_1 provided by NPN_1. A message for making a notification of allowance of registration includes NSSAI_NPN_1 as the allowed NSSAI. In addition, the message for making a notification of allowance of registration includes a profile such as subscription data related to temporary subscription with NPN_1. Here, the temporary subscription with NPN_1 is, for example, subscription for using NPN_1 as the VPLMN or the HPLMN. In addition, an expiration date may be set in the profile such as the subscription data related to the temporary subscription with NPN_1. The UE 200 can use the service provided by NPN_1 until this expiration date.

The ME 201 of the UE 200 stores the profile such as the subscription data related to the temporary subscription with NPN_1 in a storage area of the USIM 204 (Step S702). That is, the USIM 204 is in a state of holding the profile such as the subscription data related to the subscription with NPN_1 in addition to the profile based on the subscription with PLMN_1 that is the first provider. Here, the profile such as the subscription data related to the subscription with NPN_1 includes, for example, information necessary for using NPN_1 as the VPLMN or the HPLMN. Here, the information necessary for using NPN_1 as the VPLMN or the HPLMN is, for example, a PLMN ID or an SNPN ID for identifying NPN_1 or the SNPN to be described later, and is stored in an operator controlled PLMN selector list, an equivalent HPLMN list, or a list for similar purposes of the USIM.

The UE 200 requests PDU session establishment in order to use the service corresponding to NSSAI_NPN_1 provided by NPN_1 (Step S703). The AMF 309 that has received the request for PDU session establishment for using the service corresponding to NSSAI_NPN_1 instructs the UE 200 to perform PLMN selection processing for using NPN_1 as the VPLMN.

In accordance with the instruction from the AMF 309, the UE 200 performs the PLMN selection processing for using NPN_1 as the VPLMN (Step S704). As the PLMN selection processing, the UE 200 selects NPN_1 as the VPLMN and performs cell reselection processing on cells belonging to NPN_1. As a result of the cell reselection processing, completion of the PLMN selection processing in which NPN_1 is used as the VPLMN is reported as a response to the AMF₂ 509 via the base station device 20₂₁ belonging to NPN_1 selected as the serving cell (Step S705) .

The UE 200 receives permission of PDU session establishment for using the service corresponding to NSSAI_NPN_1 via the base station device 20₂₁ belonging to NPN_1 (Step S706). The UE 200 starts to use the service corresponding to NSSAI_NPN_1 via the base station device 20₂₁ belonging to NPN_1 (Step S707). Here, the base station device 20₂₁ belonging to NPN_1 operates in the form of the stand-alone non-public network (SNPN). In order to identify the SNPN, an SNPN ID which is an identifier obtained by combining a PLMN ID and a network identifier (NID) is used. Here, the PLMN ID is a PLMN ID corresponding to NPN_1. In addition, the PLMN selection processing includes SNPN selection processing of selecting a specific SNPN based on the SNPN ID. Furthermore, in a case where a human-readable network name (HRNN) is provided, a specific PLMN or SNPN may be selected based on the HRNN in the PLMN selection processing.

Although FIG. 17 illustrates an example in which the UE 200 is instructed to perform the PLMN selection processing for using NPN_1 as the VPLMN in the PDU session establishment processing, processing for causing the base station device 20₂₁ belonging to NPN_1 to camp on may be performed in the registration procedure performed before the PDU session establishment processing. In the registration procedure, the UE 200 that has acquired the information necessary for using NPN_1 as the VPLMN or the HPLMN performs the PLMN selection processing and selects NPN_1. Then, the UE 200 can perform the cell reselection processing for a frequency corresponding to NPN_1 and cause the base station device 20₂₁ belonging to NPN_1 to camp on.

### <4-2. Example 2 of Session Establishment>

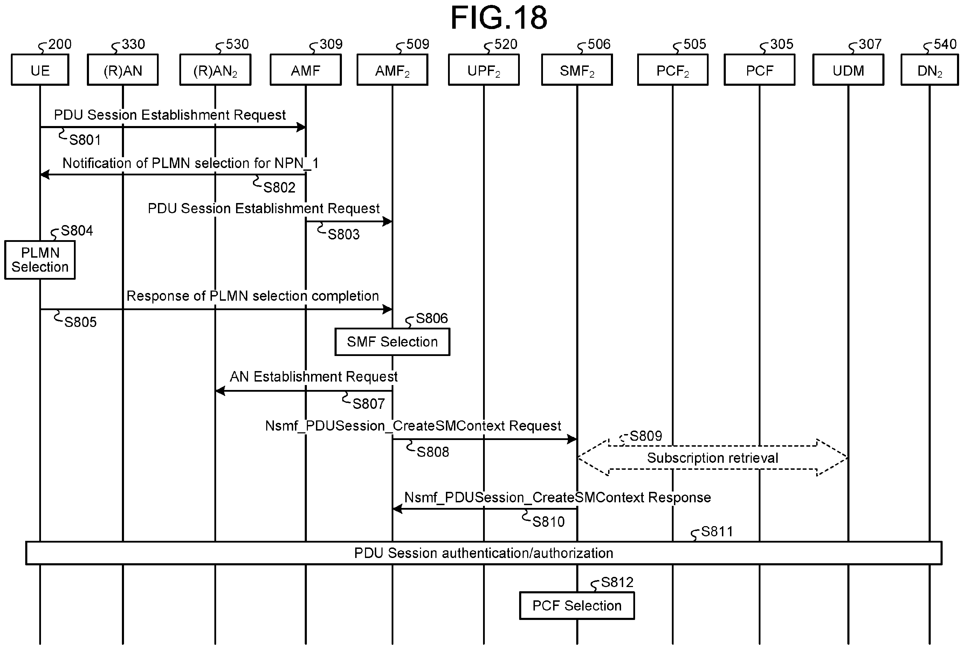

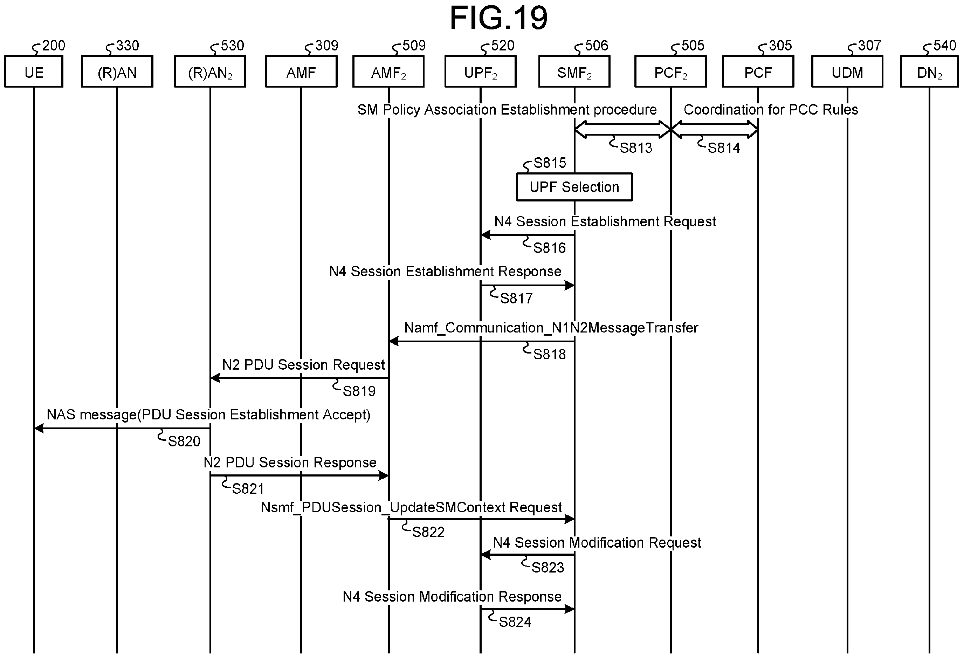

Next, another example of the PDU session establishment processing will be described with reference to FIGS. 18 and 19. FIGS. 18 and 19 are diagrams illustrating another example of the PDU session establishment processing.

The UE 200 transmits the PDU session establishment request message to the AMF 309 via the (R)AN 330 (Step S801). Here, the PDU session establishment request message includes NSSAI_NPN_1, which is S-NSSAI corresponding to the requested service, in the allowed NSSAI.

Once the PDU session establishment request message is received, the AMF 309 instructs the UE 200 to perform the PLMN selection processing for using NPN_1 as the VPLMN since NSSAI_NPN_1 is a service provided via the (R)AN₂ 530 operating in the form of the SNPN (Step S802) . In addition, the AMF 309 transfers the PDU session establishment request message to the AMF₂ 509 (Step S803) .

The UE 200 performs the PLMN selection processing according to the instruction from the AMF 309 (Step S804), and selects NPN_1 as the VPLMN. The UE 200 transmits a NAS message indicating that the PLMN selection processing is completed to the AMF₂ 509 as a response to the instruction to perform the PLMN selection processing from the AMF 309 via the (R)AN₂ 530 (Step S805). As described above, in a case where the UE 200 causes the (R)AN₂ 530 to camp on in the registration procedure, the UE 200 transmits the PDU session establishment request message to the AMF₂ 509 via the (R)AN₂ 530 in Step S801. In this case, the processing of Steps S802 to S805 is omitted.

The AMF₂ 509 performs SMF selection to select the SMF₂ 506 belonging to NPN_1 (Step S806) . The AMF₂ 509 transmits the AN establishment request to the (R)AN₂ 530 (Step S807) .

The AMF₂ 509 transmits the Nsmf_PDUSession_CreateSMContext request including S-NSSAI of the allowed NSSAI to the selected SMF₂ 506 (Step S808) . Here, the Nsmf_PDUSession_CreateSMContext request includes the SUPI and the S-NSSAI.

In a case where the session management subscription data corresponding to the SUPI and the S-NSSAI is not available, the SMF₂ 506 acquires the session management subscription data from the UDM 307 by using Nudm_SDM_Get (Step S809), and performs registration by using Nudm_SDM_Subscribe in order to be notified when the session management subscription data is updated. For example, in a case where a subscription contract for using a service corresponding to NSSAI_NPN_1 has an expiration date, when the expiration date is reached, the session management subscription data is updated and a notification thereof is made from the UDM 307 to the SMF₂ 506.

If the PDU session establishment request can be processed, the SMF₂ 506 that has received the Nsmf_PDUSession_CreateSMContext request generates an SM context, returns, to the AMF₂ 509, the Nsmf_PDUSession_CreateSMContext response, and provides the SM Context ID (Step S810). In a case where the second authentication/authorization processing by the DN-AAA server needs to be performed during PDU session establishment, the SMF₂ 506 starts the PDU session establishment authentication/authorization processing (Step S811) .

In a case where the dynamic PCC is applied to a PDU session to be established, the SMF₂ 506 performs PCF selection (Step S812). The SMF₂ 506 may apply a local policy.

In addition, the SMF₂ 506 may perform the SM policy association establishment procedure to establish SM policy association with the PCF₂ 505 and acquire the default PCC rules for the PDU session (Step S813). Thereby, the PCC rules can be acquired before selecting a UPF₂ 520. Here, the PCF₂ 505 may create the PCC rules in coordination with the PCF 305 (Step S814).

The SMF₂ 506 performs charging processing based on the acquired PCC rules. Here, as a charging method using the PCC rules, volume based charging, time based charging, volume and time based charging, event based charging, and no charging are supported, and any charging method is set in the SM policy association establishment procedure.

The SMF₂ 506 performs UPF selection to select one or more UPF₂s 520 (Step S815). The SMF₂ 506 transmits the N4 session establishment request message to the selected UPF₂ 520 (Step S816). The UPF₂ 520 returns the N4 session establishment response message to respond to the SMF₂ 506 (Step S817). In a case where a plurality of UPF₂s 520 are selected for the PDU session, the N4 session establishment processing is started for each UPF₂ 520.

The SMF₂ 506 transmits a Namf_Communication_N1N2 MessageTransfer message to the AMF₂ 509 (Step S818). Here, the Namf_Communication_N1N2 MessageTransfer message includes a PDU session ID, N2 SM information, CN Tunnel Info, S-NSSAI of the allowed NSSAI, and an N1 SM container. Here, the N2 SM information includes a PDU session ID, QFI(s), QoS profile(s), and the like. In addition, in a case where a plurality of UPF₂s 520 are used for the PDU session, CN Tunnel Info includes tunnel information related to the plurality of UPF₂s 520 that terminate N3.

The N1 SM container includes PDU Session Establishment Accept that the AMF₂ 509 has to provide to the UE 200. In addition, PDU Session Establishment Accept includes the S-NSSAI of the allowed NSSAI. The Namf_Communication_N1N2 MessageTransfer message includes a PDU session ID so that the AMF₂ 509 knows which access to use for the UE 200.

The AMF₂ 509 transmits the N2 PDU session request message to the (R)AN₂ 530 (Step S819). Here, the AMF₂ 509 transmits, to the (R)AN₂ 530, an NAS message including the PDU session ID and PDU Session Establishment Accept to be transmitted to the UE 200 and the N2 SM information received from the SMF₂ 506 via the N2 PDU session request message. Here, the (R)AN₂ 530 is the base station device 20₂₁ belonging to NPN_1.

The (R)AN₂ 530 transfers the NAS message including the PDU session ID and the N1 SM container to the UE 200 (Step S820). Here, the N1 SM container includes PDU Session Establishment Accept.

The (R)AN₂ 530 returns, to the AMF₂ 509, the N2 PDU session response message (Step S821). The AMF₂ 509 transfers the N2 SM information received from the (R)AN₂ 530 to the SMF₂ 506 via the Nsmf_PDUSession_UpdateSMContext Request message including the SM Context ID and the N2 SM information (Step S822) .

The SMF₂ 506 starts an N4 session modification procedure with the UPF₂ 520, and transmits an N4 session modification request message to the UPF₂ 520 (Step S823) . The SMF₂ 506 provides AN tunnel information (AN Tunnel Info) to the UPF₂ 520 in addition to a transfer rule.

The UPF₂ 520 returns, to the SMF₂ 506, an N4 session modification response message (Step S824). In a case where a plurality of UPF₂s 520 are used in the PDU session, the above-described N4 session modification procedure is performed on all the UPF₂s 520 that terminate N3. The PDU session is established according to the above processing.

FIGS. 18 and 19 illustrate an example in which NPN_1 is selected as the VPLMN in accordance with an instruction from the AMF 309, but the AMF 309 can also instruct the UE 200 to select NPN_1 as the HPLMN. In a case where NPN_1 is selected as the HPLMN, the SMF₂ 506 obtains the session management subscription data from the UDM₂ 507 by using Nudm_SDM_Get. In addition, when creating the PCC rules, the PCF₂ 505 does not need to cooperate with the PCF 305.

### <4-3. Example 2 of Termination of Service>

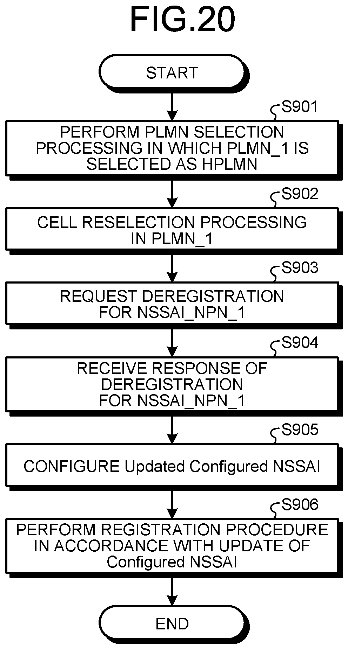

Next, another processing performed by the UE 200 that is the wireless communication device 40 when the service provided by NPN_1 is terminated will be described with reference to FIG. 20. FIG. 20 is a flowchart for describing another example of processing until a service provided by the local wireless communication service is terminated. A description of points similar to those described above in FIGS. 12, 16, 17, and the like will be omitted.

First, the UE 200 performs PLMN selection processing in which PLMN_1 is selected as the HPLMN (Step S901). Then, the UE 200 performs cell reselection processing for a cell belonging to PLMN_1 (Step S902).

As a result of the cell reselection processing, the UE 200 requests the AMF 309 to perform deregistration for NSSAI_NPN_1 via the base station device 20₁₁ belonging to PLMN_1 selected as the serving cell (Step S903). The UE 200 receives a response of the deregistration for NSSAI_NPN_1 from the AMF 309 (Step S904).

The response of the deregistration includes the configured NSSAI that does not include S-NSSAI(s) corresponding to the service provided by NPN_1 is included as the updated configured NSSAI. That is, the configured NSSAI includes only S-NSSAI(s) corresponding to the service provided by PLMN_1.

In addition, the response of the deregistration includes a notification instructing deletion of the profile such as the subscription data related to the temporary subscription with NPN_1, and the ME 201 of the UE 200 deletes the profile such as the subscription data related to the temporary subscription with NPN_1 from the storage area of the USIM 204 according to the instruction.

The UE 200 configures the received updated configured NSSAI (Step S905). The UE 200 performs the registration procedure illustrated in FIG. 8 in accordance with the update of the configured NSSAI (Step S906).

The example in which the local communication service provided by each NPN operator is used on an on-demand basis under the subscription contract with the first provider has been described above. The local communication service provided by each NPN operator is provided via a base station device operating in the form of the SNPN or a base station device operating in the form of the PNI-NPN. As described above, the network function of the first provider, for example, the AMF controls registration with a service provided by an NPN operator and the access method based on the form in which the NPN operator provides the service to the first provider.

It goes without saying that some or all of the processing of the above-described example can be applied to a case where the PLMN provider provides a service corresponding to S-NSSAI different between a macro cell and a small cell operating at a frequency (for example, a frequency higher than the operating frequency of the macro cell) different from that of the macro cell within a coverage of the macro cell. At this point, the macro cell corresponds to the base station device 20₁₁ or the (R)AN 330, and the small cell corresponds to the base station device 20₂₁ belonging to NPN_1 or the (R)AN₂ 530. In a case where the PLMN provider corresponds to one AMF, the AMF 309 and the AMF₂ 509 are treated as the same AMF, and in a case where the PLMN operator corresponds to a plurality of AMFs, the AMF 309 and the AMF₂ 509 are different nodes belonging to the same PLMN. In addition, in a case where the PLMN provider corresponds to one SMF, the SMF 306 and the SMF₂ 506 are treated as the same SMF, and in a case where the PLMN operator corresponds to a plurality of SMFs, the SMF 306 and the SMF₂ 506 are different nodes belonging to the same PLMN. Furthermore, other nodes, for example, the UPF, the PCF, the UDM, the DN, and the like can be treated in a similar manner to the AMF and the SMF.

### <5. Conclusion>

As described above, according to an embodiment of the present disclosure, even in a case where the number of NPN providers that locally and temporarily provide a service increases, the management device 100 (for example, the management device 100₁₁) can easily allow a user who uses the wireless communication device 40 to easily use the local and temporary service provided by the NPN provider by using always used subscription with a public wireless service provider without taking time and effort to make a subscription contract with each NPN provider. As described above, even in a case where the number of NPN providers that locally and temporarily provide a service increases, the wireless communication device 40 can simply use the local and temporary service provided by the NPN provider. As a result, even in a case where the number of NPN providers that locally and temporarily provide a service increases, it is possible to configure the communication system 1 that can simply use the local and temporary service provided by the NPN provider.

In addition, it is possible to configure the wireless communication device 40 that can discover the service of the NPN provider only when necessary and request permission to use only the necessary service without performing the discovery each time the wireless communication device 40 is present in a service area of the NPN provider, which is cumbersome. As a result, it is possible to configure the communication system 1 that can discover the service of the NPN provider only when necessary without performing the discovery every time the wireless communication device 40 is present in the service area of the NPN provider, which is cumbersome. In addition, it is possible to configure the communication system 1 that can start use of the service of the NPN operator only when necessary.

In addition, it is possible to configure the base station device 20 that easily assists, even in a case where the number of NPN providers that locally and temporarily provide a service increases, the local and temporary use provided by the NPN provider by using always used subscription with a public wireless service provider without taking time and effort to make a subscription contract with each NPN provider each time.

In addition, it is possible to configure the base station device 20 for an NPN service provider to easily provide a local and temporary service even in a case where the number of NPN providers that locally and temporarily provide a service increases.

Although the respective embodiments of the present disclosure have been described above, the technical scope of the present disclosure is not limited to the above-described embodiments, and various modifications can be made without departing from the scope of the present disclosure. Moreover, components of different embodiments and modified examples may be appropriately combined.

Further, the effects in each embodiment described in the present specification are merely examples. The effects of the present disclosure are not limited thereto, and other effects may be obtained.

Note that the present technology can also have the following configurations.
(1) A management device comprising:
   a reception unit that receives, from a wireless communication device, a request for updating first information for selecting a service provided by a public wireless communication service; and
   a transmission unit that transmits, to the wireless communication device, third information obtained by adding second information for selecting a service provided by a local wireless communication service to the first information, in response to the request from the wireless communication device.
(2) The management device according to (1),
   wherein the transmission unit transmits a non-access stratum (NAS) message including the third information to the wireless communication device.
(3) The management device according to (1) or (2),
   wherein the transmission unit transmits, to the wireless communication device, the third information obtained by adding the second information specified based on information regarding a location of the wireless communication device to the first information.
(4) The management device according to (3),
   wherein the reception unit receives the request including the information regarding the location of the wireless communication device, and
   the transmission unit transmits, to the wireless communication device, the third information obtained by adding the second information specified based on the information regarding the location received by the reception unit to the first information.
(5) The management device according to (3) or (4),
   wherein the reception unit receives the information regarding the location of the wireless communication device measured by a device other than the wireless communication device, and
   the transmission unit transmits, to the wireless communication device, the third information obtained by adding the second information specified based on the information regarding the location measured by the another device to the first information.
(6) The management device according to any one of (1) to (5),
   wherein the reception unit receives, from the wireless communication device, a registration request including information corresponding to one service specified from the second information for selecting one service from among one or more services provided by the local wireless communication service included in the third information.
(7)
   The management device according to (6),
   wherein the reception unit receives a session establishment request including the information for selecting the one service for which registration is accepted, and
   the transmission unit instructs the wireless communication device to perform handover from a first base station device that provides the public wireless communication service to a second base station device that provides the local wireless communication service.
(8) The management device according to (6),
   wherein the reception unit receives a session establishment request including the information for selecting the one service for which registration is accepted, and
   the transmission unit instructs the wireless communication device to perform processing of establishing dual connectivity in which a first base station device that provides the public wireless communication service is a master cell group and a second base station device that provides the local wireless communication service is a secondary cell group.
(9) The management device according to any one of (1) to (8), further comprising
   an addition processing unit that performs processing for adding the second information to the first information,
   wherein the transmission unit transmits, to the wireless communication device, the third information obtained by adding the second information to the first information by the addition processing unit.
(10) A management method comprising:
   receiving, from a wireless communication device, a request for updating first information for selecting a service provided by a public wireless communication service; and
   transmitting, to the wireless communication device, third information obtained by adding second information for selecting a service provided by a local wireless communication service to the first information, in response to the request from the wireless communication device.
(11) A wireless communication device comprising:
   a request unit that requests an external device to update first information for selecting a service provided by a public wireless communication service; and
   a transmission/reception unit that receives, from the external device, third information obtained by adding second information for selecting a service provided by a local wireless communication service to the first information,
   wherein connection to a network of the local wireless communication service is established by using the third information.
(12) The wireless communication device according to (11), further comprising
   a detection unit that detects a location of the wireless communication device,
   wherein the request unit transmits, to the external device, the request including information regarding the location detected by the detection unit.
(13) The wireless communication device according to (12), further comprising
   a generation unit that generates a first NAS message for requesting update of the first information for selecting the service,
   wherein the first NAS message includes the information regarding the location detected by the detection unit.
(14) The wireless communication device according to (13), further comprising
   a universal subscriber identity module (USIM) management unit that manages a profile related to contract information,
   wherein the USIM management unit stores a profile related to contract information of a public wireless communication provider,
   the transmission/reception unit transmits the first NAS message to a network of the public wireless communication provider based on the profile related to the contract information of the public wireless communication provider, and receives a second NAS message, and
   the second NAS message includes the third information obtained by adding the second information for selecting one or more services provided by a non-public network (NPN) provider that provides the local wireless communication service in an area including the location specified by the information regarding the location to the first information.
(15) The wireless communication device according to (14), further comprising
   a configuring unit that configures information for selecting a service,
   wherein the configuring unit configures the third information instead of the first information in response to reception of the second NAS message.
(16) The wireless communication device according to (15),
   wherein the transmission/reception unit specifies one service from among one or more services provided by the NPN provider, transmits a third NAS message for a registration request including information for identifying the specified one service to the network of the public wireless communication provider, and receives a fourth NAS message as a response to the third NAS message, and
   the fourth NAS message includes information indicating that registration for the specified one service from among one or more services provided by the NPN provider is accepted.
(17) The wireless communication device according to (16),
   wherein the information indicating that registration for the one service is accepted includes information regarding a closed access group (CAG),
   a second base station device belonging to a network of the NPN provider is a cell corresponding to the CAG, and
   the transmission/reception unit transmits, via a first base station device belonging to the network of the public wireless communication provider, a fifth NAS message for requesting protocol data unit (PDU) session establishment, the fifth NAS message including information for identifying the one service for which registration is accepted from among one or more services provided by the NPN provider, and receives an instruction to perform handover from the first base station device to the second base station device.
(18) The wireless communication device according to (16),
   wherein the information indicating that registration for the one service is accepted includes information regarding a CAG,
   a second base station device belonging to a network of the NPN provider is a cell corresponding to the CAG, and
   when a fifth NAS message for requesting PDU session establishment is transmitted via a first base station device belonging to the network of the public wireless communication provider, the fifth NAS message including information for identifying the one service for which registration is accepted from among one or more services provided by the NPN provider, the transmission/reception unit receives, from the first base station device, an instruction to perform dual connectivity establishment processing with the first base station device as a master cell group and the second base station device as a secondary cell group.
(19) The wireless communication device according to (17),
   wherein the transmission/reception unit receives a sixth NAS message as a response to the fifth NAS message, and the sixth NAS message includes information for identifying a PDU session established via the second base station device.
(20) A wireless communication method comprising:
   requesting an external device to update first information for selecting a service provided by a public wireless communication service;
   receiving, from the external device, third information obtained by adding second information for selecting a service provided by a local wireless communication service to the first information; and
   establishing connection to a network of the local wireless communication service by using the third information.
(21) A base station device that belongs to a network of a public wireless communication provider, the base station including:
   a transfer unit that transfers a NAS message received from a wireless communication device or a management device that manages radio access and mobility to the management device or the wireless communication device; and
   a control unit that controls radio access to the wireless communication device,
   wherein the transfer unit receives, from the wireless communication device, a first NAS message including a request for establishment of a PDU session for one service provided by an NPN provider within a coverage of the base station device, and
   the control unit receives, from the management device, a notification of an instruction for establishing radio access between a second base station device belonging to the NPN provider and the wireless communication device, as a response to transferring the first NAS message to the management device.
(22) The base station device according to (21), in which the transfer unit receives a second NAS message including a CAG ID of the second base station device from the management device, and transfers the second NAS message to the wireless communication device, and
   the instruction for establishing radio access between the second base station device and the wireless communication device is an instruction to perform handover from the base station device to the second base station device.
(23) The base station device according to (21), in which the transfer unit receives a second NAS message including a CAG ID of the second base station device from the management device, and transfers the second NAS message to the wireless communication device, and
   the instruction for establishing radio access between the second base station device and the wireless communication device is an instruction to add the second base station device as a secondary node to the base station device operating as a master node.
(24) The base station device according to (21), in which the transfer unit receives a second NAS message including a request for updating first information for selecting one or more services provided by the public wireless communication provider from the wireless communication device in which the first information is configured, receives a third NAS message including third information including second information for selecting the one service from among one or more services provided by the NPN provider in addition to the first information as a response to transferring the second NAS message to the management device, and transfers the third NAS message to the wireless communication device.
(25) A base station device that belongs to an NPN provider that provides a local wireless communication service within a coverage of a first base station device belonging to a network of a public wireless communication provider, in which when a wireless communication device transmits, via the first base station device, a first NAS message including a request for establishment of a PDU session for one service provided by the NPN provider to a management device belonging to a network of the public wireless communication provider, radio access with the wireless communication device is established based on an instruction from the management device.
(26) The base station device according to (25), in which the management device belonging to the network of the public wireless communication provider transmits a second NAS message including a CAG ID of the base station device to the wireless communication device within a coverage of the base station device via the first base station device, and
   the instruction is an instruction to perform handover from the first base station device to the base station device.
(27) The base station device according to (25), in which the management device belonging to the network of the public wireless communication provider transmits a second NAS message including a CAG ID of the base station device to the wireless communication device within a coverage of the base station device via the first base station device, and
   the instruction is an instruction to add the base station device as a secondary node to the first base station device operating as a master node.

### Reference Signs List

- 1: COMMUNICATION SYSTEM
- 20: BASE STATION DEVICE
- 40: WIRELESS COMMUNICATION DEVICE
- 100: MANAGEMENT DEVICE
- 11, 21, 41: COMMUNICATION UNIT
- 12, 22, 42: STORAGE UNIT
- 13, 24, 45: CONTROL UNIT
- 131: RECEPTION UNIT
- 132, 451: ACQUISITION UNIT
- 133: ADDITION PROCESSING UNIT
- 134: TRANSMISSION UNIT
- 241: TRANSFER UNIT
- 242: CONTROL PROCESSING UNIT
- 452: REQUEST UNIT
- 453: TRANSMISSION/RECEPTION UNIT
- 454: GENERATION UNIT
- 455: CONFIGURING UNIT

## Claims

1. A management device comprising:
a reception unit that receives, from a wireless communication device, a request for updating first information for selecting a service provided by a public wireless communication service; and
a transmission unit that transmits, to the wireless communication device, third information obtained by adding second information for selecting a service provided by a local wireless communication service to the first information, in response to the request from the wireless communication device.

2. The management device according to claim 1,
wherein the transmission unit transmits a non-access stratum (NAS) message including the third information to the wireless communication device.

3. The management device according to claim 1,
wherein the transmission unit transmits, to the wireless communication device, the third information obtained by adding the second information specified based on information regarding a location of the wireless communication device to the first information.

4. The management device according to claim 3,
wherein the reception unit receives the request including the information regarding the location of the wireless communication device, and
the transmission unit transmits, to the wireless communication device, the third information obtained by adding the second information specified based on the information regarding the location received by the reception unit to the first information.

5. The management device according to claim 3,
wherein the reception unit receives the information regarding the location of the wireless communication device measured by a device other than the wireless communication device, and
the transmission unit transmits, to the wireless communication device, the third information obtained by adding the second information specified based on the information regarding the location measured by the another device to the first information.

6. The management device according to claim 1,
wherein the reception unit receives, from the wireless communication device, a registration request including information corresponding to one service specified from the second information for selecting one service from among one or more services provided by the local wireless communication service included in the third information.

7. The management device according to claim 6,
wherein the reception unit receives a session establishment request including the information for selecting the one service for which registration is accepted, and
the transmission unit instructs the wireless communication device to perform handover from a first base station device that provides the public wireless communication service to a second base station device that provides the local wireless communication service.

8. The management device according to claim 6,
wherein the reception unit receives a session establishment request including the information for selecting the one service for which registration is accepted, and
the transmission unit instructs the wireless communication device to perform processing of establishing dual connectivity in which a first base station device that provides the public wireless communication service is a master cell group and a second base station device that provides the local wireless communication service is a secondary cell group.

9. The management device according to claim 1, further comprising
an addition processing unit that performs processing for adding the second information to the first information,
wherein the transmission unit transmits, to the wireless communication device, the third information obtained by adding the second information to the first information by the addition processing unit.

10. A management method comprising:
receiving, from a wireless communication device, a request for updating first information for selecting a service provided by a public wireless communication service; and
transmitting, to the wireless communication device, third information obtained by adding second information for selecting a service provided by a local wireless communication service to the first information, in response to the request from the wireless communication device.

11. A wireless communication device comprising:
a request unit that requests an external device to update first information for selecting a service provided by a public wireless communication service; and
a transmission/reception unit that receives, from the external device, third information obtained by adding second information for selecting a service provided by a local wireless communication service to the first information,
wherein connection to a network of the local wireless communication service is established by using the third information.

12. The wireless communication device according to claim 11, further comprising
a detection unit that detects a location of the wireless communication device,
wherein the request unit transmits, to the external device, the request including information regarding the location detected by the detection unit.

13. The wireless communication device according to claim 12, further comprising
a generation unit that generates a first NAS message for requesting update of the first information for selecting the service,
wherein the first NAS message includes the information regarding the location detected by the detection unit.

14. The wireless communication device according to claim 13, further comprising
a universal subscriber identity module (USIM) management unit that manages a profile related to contract information,
wherein the USIM management unit stores a profile related to contract information of a public wireless communication provider,
the transmission/reception unit transmits the first NAS message to a network of the public wireless communication provider based on the profile related to the contract information of the public wireless communication provider, and receives a second NAS message, and
the second NAS message includes the third information obtained by adding the second information for selecting one or more services provided by a non-public network (NPN) provider that provides the local wireless communication service in an area including the location specified by the information regarding the location to the first information.

15. The wireless communication device according to claim 14, further comprising
a configuring unit that configures information for selecting a service,
wherein the configuring unit configures the third information instead of the first information in response to reception of the second NAS message.

16. The wireless communication device according to claim 15,
wherein the transmission/reception unit specifies one service from among one or more services provided by the NPN provider, transmits a third NAS message for a registration request including information for identifying the specified one service to the network of the public wireless communication provider, and receives a fourth NAS message as a response to the third NAS message, and
the fourth NAS message includes information indicating that registration for the specified one service from among one or more services provided by the NPN provider is accepted.

17. The wireless communication device according to claim 16,
wherein the information indicating that registration for the one service is accepted includes information regarding a closed access group (CAG),
a second base station device belonging to a network of the NPN provider is a cell corresponding to the CAG, and
the transmission/reception unit transmits, via a first base station device belonging to the network of the public wireless communication provider, a fifth NAS message for requesting protocol data unit (PDU) session establishment, the fifth NAS message including information for identifying the one service for which registration is accepted from among one or more services provided by the NPN provider, and receives an instruction to perform handover from the first base station device to the second base station device.

18. The wireless communication device according to claim 16,
wherein the information indicating that registration for the one service is accepted includes information regarding a CAG,
a second base station device belonging to a network of the NPN provider is a cell corresponding to the CAG, and
when a fifth NAS message for requesting PDU session establishment is transmitted via a first base station device belonging to the network of the public wireless communication provider, the fifth NAS message including information for identifying the one service for which registration is accepted from among one or more services provided by the NPN provider, the transmission/reception unit receives, from the first base station device, an instruction to perform dual connectivity establishment processing with the first base station device as a master cell group and the second base station device as a secondary cell group.

19. The wireless communication device according to claim 17,
wherein the transmission/reception unit receives a sixth NAS message as a response to the fifth NAS message, and the sixth NAS message includes information for identifying a PDU session established via the second base station device.

20. A wireless communication method comprising:
requesting an external device to update first information for selecting a service provided by a public wireless communication service;
receiving, from the external device, third information obtained by adding second information for selecting a service provided by a local wireless communication service to the first information; and
establishing connection to a network of the local wireless communication service by using the third information.

## Amended claims

### Amended claims under Art. 19.1 PCT

1. (Amended) A management device comprising:
a reception unit that receives a request for updating first information for selecting a service provided by a public wireless communication service from a wireless communication device in which the first information is configured in advance and second information for selecting a service provided by a local wireless communication service is not known;
an addition processing unit that generates, in response to the request from the wireless communication device, third information in which the second information for selecting the service provided by the local wireless communication service is added to the first information; and
a transmission unit that transmits, to the wireless communication device, an instruction to update the first information to the third information.

2. (Amended) The management device according to claim 1,
wherein the transmission unit transmits a non-access stratum (NAS) message including the instruction to the wireless communication device.

3. (Amended) The management device according to claim 1,
wherein the addition processing unit generates the third information in which the second information specified based on information regarding a location of the wireless communication device is added to the first information.

4. (Amended) The management device according to claim 3,
wherein the reception unit receives the request including the information regarding the location of the wireless communication device, and
the addition processing unit generates the third information in which the second information specified based on the information regarding the location received by the reception unit is added to the first information.

5. (Amended) The management device according to claim 3,
wherein the reception unit receives the information regarding the location of the wireless communication device measured by a device other than the wireless communication device, and
the addition processing unit generates the third information obtained in which the second information specified based on the information regarding the location measured by the another device is added to the first information.

6. (Amended) The management device according to claim 1,
wherein the reception unit receives, from the wireless communication device, a registration request including information corresponding to one service specified from the second information for selecting one service from among one or more services provided by the local wireless communication service included in the third information updated according to the instruction.

7. (Amended) The management device according to claim 6,
wherein the reception unit receives, from the wireless communication device, a session establishment request including the information for selecting the one service for which registration is accepted, and
the transmission unit instructs the wireless communication device for which session establishment has been made via a first base station device that provides the public wireless communication service to perform handover, from the first base station device, to a second base station device that provides the local wireless communication service.

8. (Amended) The management device according to claim 6,
wherein the reception unit receives, from the wireless communication device, a session establishment request including the information for selecting the one service for which registration is accepted, and
the transmission unit instructs the wireless communication device for which session establishment has been made via a first base station device that provides the public wireless communication service to perform processing of establishing dual connectivity in which the first base station device is a master cell group and a second base station device that provides the local wireless communication service is a secondary cell group.

9. (Amended) The management device according to claim 6,
wherein the transmission unit transmits, as a response to the registration request, an instruction to update a parameter for cell reselection related to a frequency corresponding to the one service specified from the second information.

10. (Amended) A management method comprising:
receiving a request for updating first information for selecting a service provided by a public wireless communication service from a wireless communication device in which the first information is configured in advance and second information for selecting a service provided by a local wireless communication service is not known;
an addition processing unit that generates, in response to the request from the wireless communication device, third information in which the second information for selecting the service provided by the local wireless communication service is added to the first information; and
transmitting, to the wireless communication device, an instruction to update the first information to the third information.

11. (Amended) A wireless communication device comprising:
a request unit that requests an external device to update first information for selecting a service provided by a public wireless communication service under a condition that the first information is configured in advance, and second information for selecting a service provided by a local wireless communication service is not known; and
a transmission/reception unit that receives, from the external device, an instruction to update the configured first information to third information obtained by adding the second information for selecting the service provided by the local wireless communication service to the first information,
wherein connection to a network of the local wireless communication service is established by using the third information.

12. The wireless communication device according to claim 11, further comprising
a detection unit that detects a location of the wireless communication device,
wherein the request unit transmits, to the external device, the request including information regarding the location detected by the detection unit.

13. The wireless communication device according to claim 12, further comprising
a generation unit that generates a first NAS message for requesting update of the first information for selecting the service,
wherein the first NAS message includes the information regarding the location detected by the detection unit.

14. The wireless communication device according to claim 13, further comprising
a universal subscriber identity module (USIM) management unit that manages a profile related to contract information,
wherein the USIM management unit stores a profile related to contract information of a public wireless communication provider,
the transmission/reception unit transmits the first NAS message to a network of the public wireless communication provider based on the profile related to the contract information of the public wireless communication provider, and receives a second NAS message, and
the second NAS message includes the third information obtained by adding the second information for selecting one or more services provided by a non-public network (NPN) provider that provides the local wireless communication service in an area including the location specified by the information regarding the location to the first information.

15. (Amended) The wireless communication device according to claim 14, further comprising
a configuring unit that configures information for selecting a service,
wherein the configuring unit configures the third information instead of the first information in response to reception of the second NAS message including an instruction to update the first information to the third information.

16. The wireless communication device according to claim 15,
wherein the transmission/reception unit specifies one service from among one or more services provided by the NPN provider, transmits a third NAS message for a registration request including information for identifying the specified one service to the network of the public wireless communication provider, and receives a fourth NAS message as a response to the third NAS message, and
the fourth NAS message includes information indicating that registration for the specified one service from among one or more services provided by the NPN provider is accepted.

17. The wireless communication device according to claim 16,
wherein the information indicating that registration for the one service is accepted includes information regarding a closed access group (CAG),
a second base station device belonging to a network of the NPN provider is a cell corresponding to the CAG, and
the transmission/reception unit transmits, via a first base station device belonging to the network of the public wireless communication provider, a fifth NAS message for requesting protocol data unit (PDU) session establishment, the fifth NAS message including information for identifying the one service for which registration is accepted from among one or more services provided by the NPN provider, and receives an instruction to perform handover from the first base station device to the second base station device.

18. The wireless communication device according to claim 16,
wherein the information indicating that registration for the one service is accepted includes information regarding a CAG,
a second base station device belonging to a network of the NPN provider is a cell corresponding to the CAG, and
when a fifth NAS message for requesting PDU session establishment is transmitted via a first base station device belonging to the network of the public wireless communication provider, the fifth NAS message including information for identifying the one service for which registration is accepted from among one or more services provided by the NPN provider, the transmission/reception unit receives, from the first base station device, an instruction to perform dual connectivity establishment processing with the first base station device as a master cell group and the second base station device as a secondary cell group.

19. The wireless communication device according to claim 17,
wherein the transmission/reception unit receives a sixth NAS message as a response to the fifth NAS message, and
the sixth NAS message includes information for identifying a PDU session established via the second base station device.

20. (Amended) A wireless communication method comprising:
requesting an external device to update first information for selecting a service provided by a public wireless communication service under a condition that the first information is configured in advance, and second information for selecting a service provided by a local wireless communication service is not known;
receiving, from the external device, an instruction to update the configured first information to third information obtained by adding the second information for selecting the service provided by the local wireless communication service to the first information; and
establishing connection to a network of the local wireless communication service by using the third information.

Statement under Art. 19.1 PCT
The claims 1 to 11, 15 and 20 have been amended. The other claims are retained unchanged. These amendments are based on paragraphs [0090] to [0100], [0116], [0164] to [0203] and the like of the specification.
